(19) Europäisches Patentamt
European Patent Office
Office européen des brevets

(11) EP 2 444 463 B1

(12) EUROPEAN PATENT SPECIFICATION

(45) Date of publication and mention of the grant of the patent:
**11.10.2017 Bulletin 2017/41**

(51) Int Cl.:
***C09D 183/04*** *(2006.01)* ***C08J 3/03*** *(2006.01)*

(21) Application number: **11185738.9**

(22) Date of filing: **19.10.2011**

(54) **Silicone emulsion composition, release paper or film, and making method**

Silikonemulsionszusammensetzung, Trennpapier oder -folie und Herstellungsverfahren

Composition d'émulsion de silicone, papier ou film détachable et procédé de fabrication

(84) Designated Contracting States:
**DE FI FR GB NL**

(30) Priority: **25.10.2010 JP 2010238467**

(43) Date of publication of application:
**25.04.2012 Bulletin 2012/17**

(73) Proprietor: **Shin-Etsu Chemical Co., Ltd.**
**Tokyo (JP)**

(72) Inventors:
- **Yamamoto, Kenji**
**Annaka-shi, Gunma (JP)**
- **Nakajima, Tsutomu**
**Annaka-shi, Gunma (JP)**

(74) Representative: **Stoner, Gerard Patrick et al**
**Mewburn Ellis LLP**
**City Tower**
**40 Basinghall Street**
**London EC2V 5DE (GB)**

(56) References cited:
**EP-A2- 1 323 796 US-A- 4 772 515**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This invention relates to a silicone emulsion composition for release paper or film having improved adhesion to paper or plastic film substrates, a release paper or film having a cured coating of the composition, and a method for preparing the release paper or film.

### BACKGROUND

It is well known from the past that release liners having release properties relative to sticky materials, typically pressure-sensitive adhesives are prepared by forming a cured coating having release properties on the surface of substrates such as paper, laminated paper and plastic film. Among the materials used for forming a cured coating having release properties are silicone compositions. For example, JP-A S62-86061 discloses a silicone composition comprising an alkenyl-containing organopolysiloxane, an organohydrogenpolysiloxane, and a platinum base compound.

Silicone compositions of this type are still predominant at the present because of their cure behavior and pot life. However, a problem has been pointed out that the adhesion between the cured coating and the substrate is not regarded sufficient. This poses limitation on the type of substrate that can be coated and necessitates pretreatment of the substrate.

Under the recent trend of available substrates, the use of plastic film substrates is increasing because of uniform and stable quality, high smoothness, and film thinness. As a wide variety of substrates are now available in the market, the requirement to improve the adhesion of silicone compositions to substrates becomes more desirable than ever.

Proposals for improving adhesion have also been made from the side of silicone compositions. For example, one attempt to use more adhesive materials includes blending of organic resins and addition of silane coupling agents. However, this attempt is utilized only under limited conditions because release properties are otherwise degraded. Another method is to modify the base polymer structure of the silicone composition. Base polymers having a branched structure containing $RSiO_{3/2}$ units are disclosed in JP-A S63-251465, JP-B H03-19267, JP-A H09-78032, and JP-A H11-193366. This method is mainly intended for light release upon high-speed peeling and for effective cure while some improvement in adhesion is achieved as a secondary effect. Also JP-A 2000-169794 and JP-A 2000-177058 propose the combined use of a solvent type silicone composition and a solventless silicone composition, thereby achieving the effect of reducing peeling speed dependence without modifying the base polymer structure. With respect to adhesion, this proposal does not surpass the existing solvent type silicone compositions.

As discussed above, there is available in the art no appropriate technique capable of improving the adhesion of a silicone composition without affecting the release properties thereof.

However, from the standpoints of environmental pollution, safety and health, it now becomes necessary to take countermeasures to reduce the amount of solvent used or to recover the solvent to stop discharge to the exterior. One effective means of reducing the amount of solvent used is use of solventless silicone compositions. In order to apply the solventless silicone compositions to paper, laminate paper or plastic film substrates uniformly to a thickness of 1 μm or less, an expensive applicator and a sophisticated technique are necessary. In general, most manufacturers hesitate to accept the change from the solvent type silicone to the solventless type silicone.

Another effective means of reducing the amount of solvent used is use of emulsion type silicone compositions. Silicone compositions of this type are known and used in the art. For example, JP-B S57-53143 discloses a composition obtained by mixing an emulsion composed of an organovinylpolysiloxane, a platinum compound, an emulsifier and water with another emulsion composed of an organohydrogenpolysiloxane, an emulsifier and water. Also known are a silicone composition produced by emulsion polymerization (see JP-A S54-52160), and a composition obtained by emulsifying an organovinylsiloxane and an organohydrogenpolysiloxane with a specific emulsifier and mixing the emulsion with an emulsion of a platinum compound (see JP-A S63-314275).

Since these emulsion type silicone compositions can be diluted with water to any desired concentration, an expensive applicator and a sophisticated technique for thin film coating are not necessary as opposed to the solventless type. Their ease of application is approximate to the solvent type.

However, emulsion type silicone compositions have not enjoyed widespread use because of drawbacks associated with water as the dispersing medium. One drawback is that high temperature cure is necessary due to the latent heat of water for vaporization, indicating poor curability as compared with the solvent and solventless types. Another drawback is that wettability and adhesion to substrates are poor because of the surface tension of water. These drawbacks become serious especially with plastic film substrates, accounting for scarce utilization of silicone emulsions.

A number of proposals have been made to solve these problems. For example, JP-A H06-57144 uses an organopolysiloxane having alkenyl groups at molecular ends, and JP-A H11-222557 discloses blending of a non-silicone polymer emulsion.

Most of these improvements relate to paper substrates. In the application where silicone emulsions are coated onto plastic film substrates, few silicone emulsions achieve satisfactory adhesion. Under the current situation, almost

no emulsions are commercially acceptable.

Citation List

Patent Document 1: JP-A S62-86061
Patent Document 2: JP-A S63-251465
Patent Document 3: JP-B H03-19267
Patent Document 4: JP-A H09-78032
Patent Document 5: JP-A H11-193366
Patent Document 6: JP-A 2000-169794
Patent Document 7: JP-A 2000-177058
Patent Document 8: JP-B S57-53143
Patent Document 9: JP-A S54-52160
Patent Document 10: JP-A S63-314275
Patent Document 11: JP-A H06-57144
Patent Document 12: JP-A H11-222557
Patent Document 13: JP-A 2003-192896 (EP 13237961 BI)

An object of the invention is to provide a silicone emulsion composition which can be coated onto a surface of a substrate such as paper or plastic film to form a non-tacky coating tenaciously adherent to the substrate surface. Another object is to provide a release paper or release film having a cured coating of the composition formed on a substrate, and a method for preparing the release paper or film.

The inventors have found that when a specific adhesion promoter is added to a conventional release paper or film-forming silicone emulsion composition, a cured coating which is tenaciously adherent to a substrate can be formed from the composition. The adhesion promoter is a compound which contains per molecule at least one substituent group having a functional group capable of radical reaction upon exposure to heat and/or UV, and at least one substituent group having a group capable of reaction with alkenyl and/or SiH group, is free of inhibitors S and P against platinum addition reaction, and is dissolvable or dispersible in the composition in a stable manner. As opposed to the prior art techniques of improving adhesion at more or less sacrifice of release properties, the addition of the adhesion promoter can improve adhesion without substantial impact on release properties.

Notably, JP-A 2003-192896 (EP 13237961 B1) of the inventors proposes a silicone emulsion composition comprising an organopolysiloxane with molecular skeleton composed mainly of trifunctional siloxane units (T units) and having a high alkenyl content, the emulsion being adherent to various plastic film substrates. This composition is suited for the manufacture of relatively heavy release film, but gives rise to cost and other problems during the manufacture of light release film. The composition is still unsatisfactory in the sense that the composition should cover a wide range of release force. Since the composition is of heat cure type, it is not necessarily the best cure formulation in the application where the composition is coated and cured to less heat resistant film substrates. Seeking for a silicone emulsion composition which can protect the substrate from thermal degradation by combining heat cure with UV radiation cure and which can achieve satisfactory film adhesion without substantial impact on release properties, the inventors have completed the present invention.

The present invention provides a release paper or film-forming silicone emulsion composition, a release paper or film, and a method for preparing the release paper or film, as defined below.

In one aspect, the invention provides an addition curing silicone emulsion composition for release paper or film as set out in claim 1.

In a preferred embodiment, component (B1) is an organopolysiloxane represented by the compositional formula (1) having a structure of the general formula (2), and having an average degree of polymerization of 2 to 50.

$$[M]_{m1}[M^A]_{m2}[D]_{d1}[D^A]_{d2}[T]_{t1}[T^A]_{t2}[Q]_{q1} \qquad (1)$$

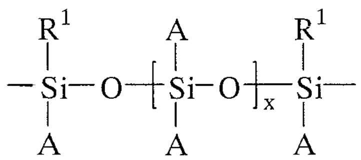

(2)

Herein $R^1$ is an alkenyl-containing substituent group of 2 to 10 carbon atoms, A is $R^2$ or a siloxane residue bonded via an oxygen atom and selected so as to meet formula (1), two A groups may form a cyclic structure as $-O(SiR^2{}_2O)_y-$, $R^2$ is a substituted or unsubstituted monovalent hydrocarbon group of 1 to 10 carbon atoms, x is an integer of 0 to 3, y is an integer selected such that the organopolysiloxane of formula (1) may have an average degree of polymerization of 2 to 50,

M, $M^A$, D, $D^A$, T, $T^A$, and Q are siloxane units as defined below, $O_{1/2}$ denoting that adjacent siloxane units are linked via an oxygen atom,

M and $M^A$ each are:

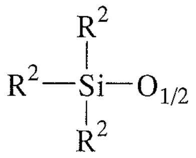
,

with the proviso that at least one $R^2$ in $M^A$ is $R^1$,

D and $D^A$ each are:

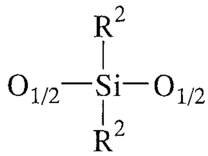
,

with the proviso that at least one $R^2$ in $D^A$ is $R^1$,

T and $T^A$ each are:

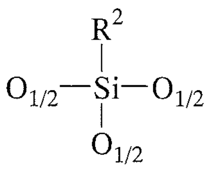
,

with the proviso that $R^2$ in $T^A$ is $R^1$,

Q is:

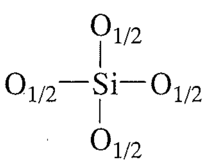
,

m1, m2, d1, d2, t1, t2, and q1 are numbers satisfying the equations:

$$t1+t2+2\times q1 \le m1+m2 \le 2+t1+t2+2\times q1$$

$$0 \le d1+d2 \le 48,\ 0 \le t1+t2 \le 30,\ 0 \le q1 \le 20,$$

$$0.25 \le (m2+d2+t2)/(m1+m2+d1+d2+t1+t2+q1) \le 1.$$

In a preferred embodiment, x in formula (2) is 0 or 1.

In a preferred embodiment, component (B1) is a compound of linear or branched siloxane structure having the general formula (3) or (4).

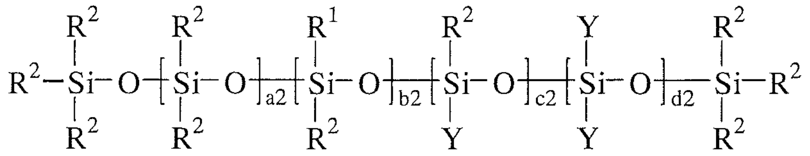

(3)

Herein $R^1$ and $R^2$ are as defined above, Y is a group of the following formula (3a):

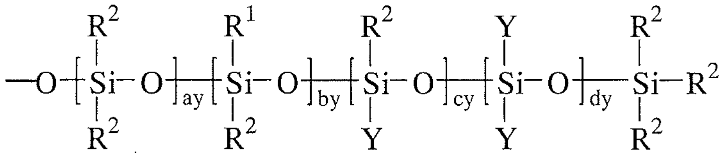

(3a)

wherein $R^1$, $R^2$ and Y are as defined above,
a2, b2, ay, and by each are an integer of 0 to 48, c2 and cy each are an integer of 0 to 30, d2 and dy each are an integer of 0 to 20,
formulae (3) and (3a) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom.

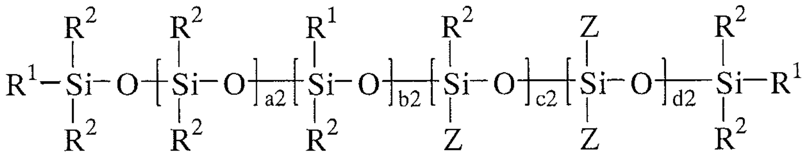

(4)

Herein $R^1$ and $R^2$ are as defined above, Z is a group of the following formula (4a):

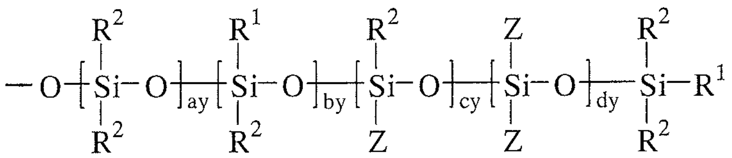

(4a)

wherein $R^1$, $R^2$ and Z are as defined above, a2, b2, ay, and by each are an integer of 0 to 48, c2 and cy each are an integer of 0 to 30, d2 and dy each are an integer of 0 to 20, formulae (4) and (4a) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom.

In another preferred embodiment, component (B1) is a compound of cyclic siloxane structure having the general formula (5).

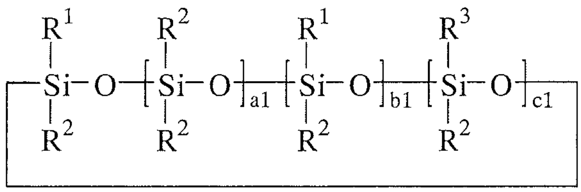

(5)

Herein $R^1$ and $R^2$ are as defined above, $R^3$ is a substituent group having an OH or SiH group as functionality or a substituted or unsubstituted monovalent hydrocarbon group of 1 to 10 carbon atoms free of aliphatic unsaturation, a1

is 0 or 1, b1 is an integer of 1 to 6, c1 is an integer of 0 to 5, and a1+b1+c1 is an integer of at least 2.

In a preferred embodiment, component (B2) is a compound containing a divalent structural unit having the general formula (6-1), a compound containing divalent structural units having the general formulae (6-2) and (6-3), a compound of cyclic structure having the general formula (7-1), or a compound of cyclic structure having the general formula (7-2).

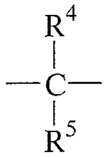

(6-1)

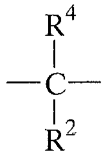

(6-2)

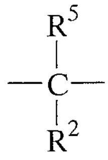

(6-3)

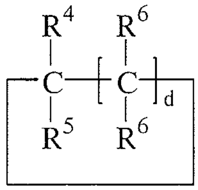

(7-1)

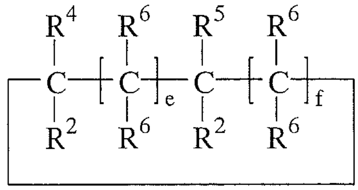

(7-2)

Herein $R^2$ is a substituted or unsubstituted monovalent hydrocarbon group of 1 to 10 carbon atoms, $R^4$ is a substituent group of 2 to 10 carbon atoms containing alkynyl, acryloyloxy or methacryloyloxy, $R^5$ is a substituent group having an OH, SiH or alkenyl group as functionality, $R^6$ is hydrogen, a saturated hydrocarbon group of 1 to 10 carbon atoms or aromatic group, the same group as $R^4$, or the same group as $R^5$, d is 4 to 10, and e+f is 3 to 9.

In another aspect, the invention provides a method for preparing a release paper or film, comprising the steps of coating the silicone emulsion composition defined above directly onto a paper or plastic film substrate, and applying heat and UV radiation to cure the coating. Typically, the step of applying heat and UV radiation includes UV irradiation and subsequent heating to cure the coating.

In a further aspect, the invention provides a release paper or film comprising a cured coating of the silicone emulsion composition defined above.

ADVANTAGEOUS EFFECT OF INVENTION

According to the invention, by incorporating an adhesion promoter of specific structure into a conventional release paper or film-forming silicone emulsion composition, coating the composition onto a substrate, and applying heat and/or UV radiation to cure the composition, there is obtained a non-tacky cured coating which is tenaciously adherent to the substrate. As opposed to the prior art techniques of improving adhesion at more or less sacrifice of release properties, the invention can improve adhesion without substantial impact on release properties.

FURTHER EXPLANATIONS; OPTIONS AND PREFERENCES

Component A

Component (A) is an organopolysiloxane containing at least two alkenyl groups in a molecule and having an absolute viscosity of at least 0.04 Pa-s at 25°C, as measured by a rotational viscometer. Specifically, the organopolysiloxane is of a structure having the general formula (8).

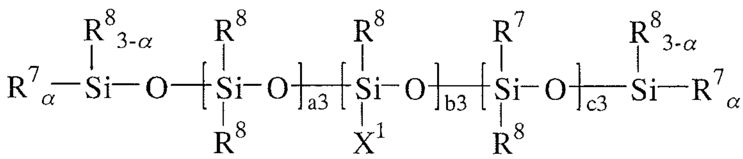

(8)

Herein $R^7$ is alkenyl, $R^8$ is a monovalent organic group free of aliphatic unsaturation or a hydroxyl group, $X^1$ is a group of formula (9):

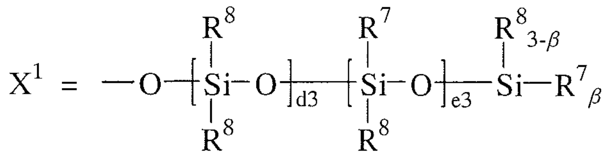

(9)

,

a3, b3, c3, d3, and e3 are such positive numbers that the organopolysiloxane may have a viscosity of at least 0.04 Pa-s at 25°C and a viscosity in 30 wt% toluene solution of up to 70 Pa-s at 25°C, b3, c3, d3, and e3 may be 0, $\alpha$ and $\beta$ each are 0 or an integer of 1 to 3.

Specifically, $R^7$ is an alkenyl group, preferably of 2 to 6 carbon atoms, such as vinyl, allyl or butenyl. $R^8$ is selected from monovalent organic groups, typically monovalent hydrocarbon groups, preferably of 1 to 20 carbon atoms, more preferably of 1 to 8 carbon atoms, for example, $C_1$-$C_{12}$ alkyl groups such as methyl, ethyl, propyl and butyl, $C_4$-$C_{20}$ cycloalkyl groups such as cyclohexyl, $C_6$-$C_{20}$ aryl groups such as phenyl and tolyl, and substituted forms of the foregoing in which some or all hydrogen atoms are replaced by halogen, cyano or the like, such as chloromethyl, trifluoropropyl, and cyanoethyl, as well as monovalent hydrocarbon groups containing $C_1$-$C_{12}$ alkoxy groups (e.g., methoxy, ethoxy, propoxy and methoxyethoxy), hydroxyl, or $C_2$-$C_{20}$ epoxy groups, such as glycidyl, glycidyloxy, or epoxycyclohexyl-substituted alkyl groups. $R^8$ is free of aliphatic unsaturation. From the industrial standpoint, $R^7$ is preferably vinyl. It is preferred for preparation and properties that methyl account for at least 80 mol% of $R^8$ in the overall organopolysiloxane as component (A).

While the organopolysiloxane as component (A) should contain at least two alkenyl groups per molecule, the content of alkenyl is desirably 0.001 to 0.3 mole per 100 g of the organopolysiloxane. In formula (8) and substituent group $X^1$, a3, b3, c3, d3, and e3 are selected such that the number of alkenyl groups per molecule: $c3+b3\times(e3+\beta)+2\alpha$ may fall in the range of 2 to 2,500. It is noted that the organopolysiloxane may have a silanol group.

Although the main skeleton structure of the organopolysiloxane (A) is linear, an organopolysiloxane containing a branched chain structure as shown by the formula wherein b3 is not equal to 0 may also be employed.

<u>Component</u> <u>B</u>

Component (B) is a characteristic component for imparting adhesion to the composition. It functions like a coupling agent capable of coupling the substrate and a non-tacky cured coating of components (A) and (C), thereby improving adhesion. If only one type of reaction is utilized for reaction or interaction with the substrate and the non-tacky cured coating made of essentially different materials, the reaction tends to be biased to either one side whereby component (B) may not fully function as the coupling agent. Thus, according to the invention, radical reaction is assigned to the reaction or interaction with the substrate whereas addition or condensation reaction is assigned to the reaction or interaction with the non-tacky cured coating.

Component (B) must serve such that a single molecule may accommodate these two different reactions. One approach to this goal is to provide one molecule solely with substituent groups of the same type containing only a functional group capable of both the reactions. Although the reaction selectivity by the functional group is low, two reactions proceed, without biasing, depending on the characteristics of the molecular structure. The organosiloxane corresponding to this approach is component (B1).

Another approach is to provide one molecule with both a substituent group capable of radical reaction with the substrate rather than addition or condensation reaction, and another substituent group capable of addition or condensation reaction with the non-tacky cured coating of components (A) and (C) rather than radical reaction. The compound corresponding to this approach is component (B2).

Component (B) may be component (B1) or a mixture of components (B1) and (B2). Components (B1) and (B2) may be mixed preferably in a weight ratio (B1):(B2) from 100:0 to 100:100, more preferably from 100:0 to 100:90, although the mixing ratio may be suitably adjusted in accordance with the desired level of adhesion, the type of substrate, and curing conditions. When a mixture of components (B1) and (B2) is used, the weight ratio (B1):(B2) preferably ranges from 100:5 to 100:100.

Since component (B1) does not require that a plurality of different functional groups be incorporated within one molecule as in component (B2), it is easy to prepare and advantageous in availability and cost. In addition, since component (B1) is a silicone compound similar to component (A) as the main component of the composition, it can be dissolved or dispersed in the composition in a stable manner, which is advantageous for the preparation and storage of the composition. These features, however, are detrimental to an access to the surface of a substrate of organic material,

with the probability of reaction or interaction with the substrate taking place via radical reaction being reduced. For example, component (A), which possesses alkenyl groups capable of radical reaction, does not undergo reaction or interaction with the substrate that is effective for adhesion. The reason is that the low intermolecular force and inorganic nature of polysiloxane structure prohibit an access to the substrate surface, and most alkenyl groups are consumed by addition reaction with SiH groups in component (C) having an identical siloxane structure. Then component (B1) has an absolute viscosity of less than 0.04 Pa-s at 25°C as measured by a rotational viscometer, a low molecular weight corresponding to a low degree of siloxane polymerization, a high alkenyl content of 0.3 to 2.0 mol/100 g, preferably 0.3 to 1.3 mol/100 g, more preferably at least 0.4 mol/100 g, wherein two siloxane units in which an alkenyl-containing substituent group is bonded to silicon atom are mutually juxtaposed in vicinity, whereby the surrounding organic nature is enhanced to facilitate an access of alkenyl group to the substrate, thereby facilitating reaction or interaction via radical reaction. It is noted that the lower limit of the absolute viscosity is usually 0.1 mPa-s, though not critical.

Component (B1) is an organopolysiloxane having a structure that two siloxane units in which an alkenyl-containing substituent group is bonded to silicon atom are linked directly or via up to 3 intervening siloxane units in which the alkenyl-containing substituent group is not bonded to silicon atom. It is noted that as long as the structure that two siloxane units in which an alkenyl-containing substituent group is bonded to silicon atom are linked directly or via up to 3 intervening siloxane units in which the alkenyl-containing substituent group is not bonded to silicon atom is included, the organopolysiloxane may include a structure that two siloxane units in which an alkenyl-containing substituent group is bonded to silicon atom are linked via 4 or more intervening siloxane units in which an alkenyl-free substituent group is bonded to silicon atom. However, it is preferred that all siloxane units in which an alkenyl-containing substituent group is bonded to silicon atom be linked directly (without an intervening siloxane unit) or via 3 or less intervening siloxane units in which an alkenyl-free substituent group is bonded to silicon atom.

Specifically, the organopolysiloxane as component (B1) may be represented by the compositional formula (1) having a structure of the general formula (2).

$[M]_{m1}[M^A]_{m2}[D]_{d1}[D^A]_{d2}[T]_{t1}[T^A]_{t2}[Q]_{q1}$ (1)

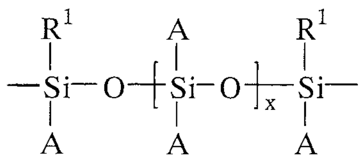

(2)

Herein $R^1$ is an alkenyl-containing substituent group of 2 to 10 carbon atoms, A is $R^2$ or a siloxane residue bonded via an oxygen atom and selected so as to meet formula (1), two A groups may form a cyclic structure as $-O(SiR^2{}_2O)_y-$, $R^2$ is a substituted or unsubstituted monovalent hydrocarbon group of 1 to 10 carbon atoms, x is an integer of 0 to 3, y is an integer selected such that the organopolysiloxane of formula (1) may have an average degree of polymerization of 2 to 50.

M, $M^A$, D, $D^A$, T, $T^A$, and Q are siloxane units as defined below, $O_{1/2}$ denoting that adjacent siloxane units are linked via an oxygen atom.

M and $M^A$ each are:

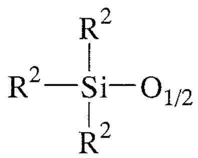

,

with the proviso that at least one $R^2$ in $M^A$ is $R^1$.

D and $D^A$ each are:

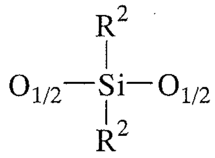
,

with the proviso that at least one $R^2$ in $D^A$ is $R^1$.

T and $T^A$ each are:

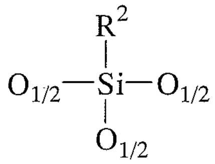
,

with the proviso that $R^2$ in $T^A$ is $R^1$.

Q is:

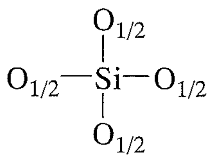
.

The subscripts m1, m2, d1, d2, t1, t2, and q1 are numbers satisfying the equations:

$$t1+t2+2\times q1 \leq m1+m2 \leq 2+t1+t2+2\times q1$$

$$0 \leq d1+d2 \leq 48,\ 0 \leq t1+t2 \leq 30,\ 0 \leq q1 \leq 20,$$

$$0.25 \leq (m2+d2+t2)/(m1+m2+d1+d2+t1+t2+q1) \leq 1.$$

Examples of the alkenyl-containing substituent group represented by $R^1$ include alkenyl groups such as vinyl and allyl, and (meth)acryloyloxy-substituted alkyl groups such as acryloyloxypropyl and methacryloyloxypropyl.

Suitable monovalent organic groups represented by $R^2$ include unsubstituted monovalent hydrocarbon groups, for example, straight, branched or cyclic alkyl groups such as methyl, ethyl, propyl and hexyl, aryl groups such as phenyl and tolyl, aralkyl groups such as benzyl, and alkenyl groups such as vinyl and allyl, and substituted forms of the foregoing monovalent hydrocarbon groups in which some or all hydrogen atoms are substituted by halogen atoms, and substituted forms of the alkyl groups in which a hydrogen atom is substituted by (meth)acryloyloxy, such as (meth)acryloyloxypropyl. Accordingly, $R^2$ may be $R^1$.

Component (B1) has an average degree of polymerization of 2 to 50, preferably 2 to 40, as measured by gel permeation chromatography (GPC) in toluene solvent versus polystyrene standards. The subscript y is an integer selected such that the organopolysiloxane of formula (1) may have an average degree of polymerization within the range. Specifically, y is preferably an integer of 0 to 10, more preferably 1 to 8.

As seen from formula (2), the organosiloxane as component (B1) has a structure that two $-SiR^1A-$ groups are linked via $-O-(SiA_2O)_x-$ wherein x is 0 to 3, preferably 0 or 1. Namely, two $-SiR^1A-$ groups having a silicon-bonded alkenyl group are juxtaposed in vicinity. When A is alkenyl, such groups are juxtaposed in close vicinity as a matter of course. Even when A is an alkyl group such as methyl or an aryl group such as phenyl, two $-SiR^1A-$ groups are juxtaposed in vicinity. The subscript x representative of an extent of vicinity is at most 3, preferably 0 or 1, within which range the effect of the invention are achievable. If x is 4 or more, adhesion declines, failing to achieve the effect of improving adhesion

without an impact on release performance.

Though not clearly seen from formula (2), a structure wherein two or more alkenyl groups are bonded to a common silicon atom is also preferred for the same reason. Such a close vicinity has a tendency that the adhesion promoting effect is affected by the type of alkenyl group. In this sense, it is important that a proper structure be selected so as to comply with the intended application.

Another effect expectable from the vicinal juxtaposition of alkenyl groups is that radical reaction proceeds predominantly while addition reaction is retarded. This effect becomes more significant when x is 0 or 1. The reason why the vicinal juxtaposition of alkenyl groups retards addition reaction is analogized from the fact that a compound of the identical structure can be utilized as an inhibitor. Once one alkenyl group is altered by radical reaction, the remaining alkenyl group becomes available for addition reaction, whereby reaction with the non-tacky cured coating takes place. In this way, the organosiloxane fully functions as the coupling agent.

If possible, the organosiloxane preferably contains at least three alkenyl groups, more preferably at least four alkenyl groups per molecule so that all alkenyl groups may not be consumed solely by the radical reaction. A low molecular weight is advantageous for the organosiloxane to function as the coupling agent because more bond sites are available over a wide area.

Examples of the organosiloxane having the structure of formula (1) include linear or branched organopolysiloxanes having the following formula (3) or (4).

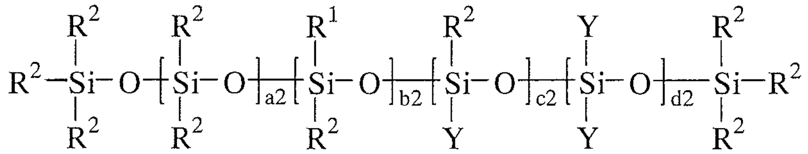
(3)

Herein $R^1$ and $R^2$ are as defined above, Y is a group of the following formula (3a):

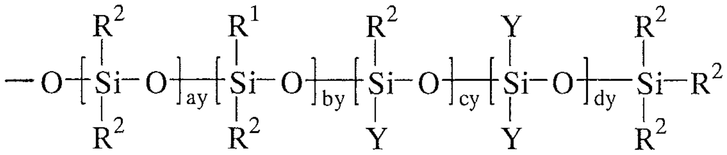
(3a)

wherein $R^1$, $R^2$ and Y are as defined above.

The subscripts a2, b2, ay, and by each are an integer of 0 to 48, preferably 0 to 45, more preferably 0 to 40, c2 and cy each are an integer of 0 to 30, preferably 0 to 25, more preferably 0 to 20, d2 and dy each are an integer of 0 to 20, preferably 0 to 18, more preferably 0 to 15.

Formulae (3) and (3a) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom. It is then excluded that all b2, by, cy, and dy are 0 at the same time.

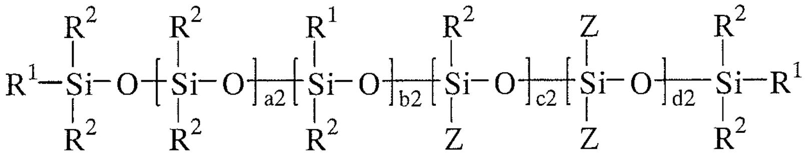
(4)

Herein $R^1$ and $R^2$ are as defined above, Z is a group of the following formula (4a):

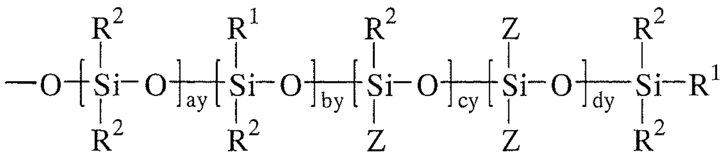
(4a)

wherein $R^1$, $R^2$ and Z are as defined above.

The subscripts a2, b2, ay, and by each are an integer of 0 to 48, preferably 0 to 45, more preferably 0 to 40, c2 and cy each are an integer of 0 to 30, preferably 0 to 25, more preferably 0 to 20, d2 and dy each are an integer of 0 to 20, preferably 0 to 18, more preferably 0 to 15.

Formulae (4) and (4a) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom.

Illustrative structures as component (B1) include linear organopolysiloxanes having the following formula:

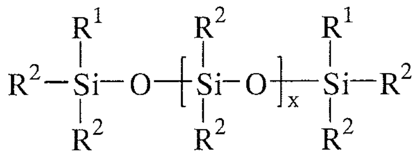

wherein x is as defined above. Also included are organopolysiloxanes of branched structure having a backbone of tri- or tetra-functional siloxane units, of the following formulae.

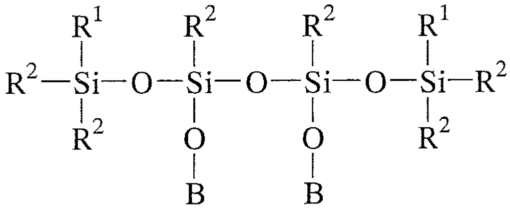

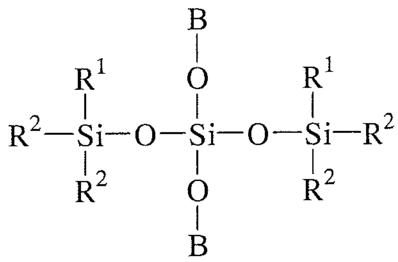

Examples of the siloxane residue A, Y, Z, and B are given below.

$$-O-(SiR^2R^{20}O)_y-SiR^2{}_2R^{20}$$

$$-O-(SiR^2R^{20}O)_{y1}-(SiR^2R^0)_{y2}-SiR^2{}_2R^{20}$$

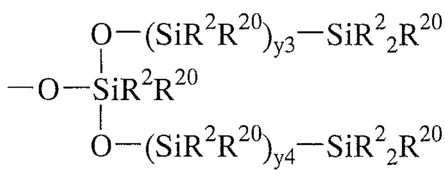

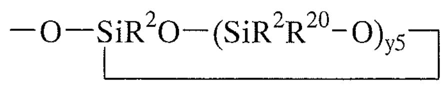

Herein $R^{20}$ is $R^2$ or $R^1$, $R^0$ is $-O-(SiR^2R^{20})_{y6}-SiR^2{}_2R^{20}$, y is as defined above, y1+y2+y6 = y, y1 and y6 each are an integer of at least 0, y2 is an integer of at least 1, y3+y4 = y, y3 and y4 each are an integer of at least 0, and y5 = y.

More specific examples are given below.

$$-OSi(CH_3)_3$$

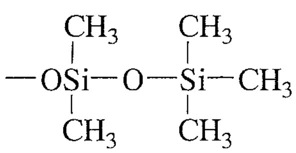

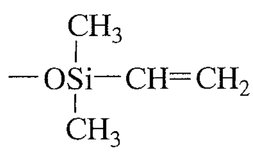

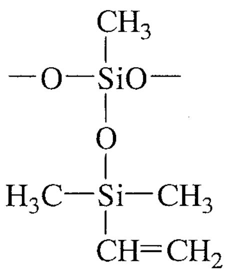

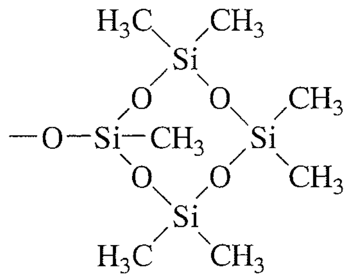

Component (B1) may also be an organopolysiloxane of cyclic structure having the general formula (5).

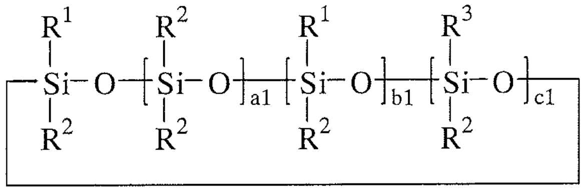

(5)

Herein $R^1$ and $R^2$ are as defined above, $R^3$ is a substituent group having an OH or SiH group as functionality or a substituted or unsubstituted monovalent hydrocarbon group of 1 to 10 carbon atoms free of aliphatic unsaturation, a1 is 0 or 1, b1 is an integer of 1 to 6, c1 is an integer of 0 to 5, and a1+b1+c1 is an integer of at least 2.

In formula (5), examples of the substituent group having an OH or SiH group as functionality, represented by $R^3$, include silicon-bonded hydroxyl, silicon-bonded hydrogen, $-CH_2CH_2CH_2-O-CH_2CH_2-OH$, and the like. Examples of the monovalent hydrocarbon group represented by $R^3$ include those exemplified above for $R^2$, with alkenyl groups being excluded.

Industrially desirable as component (B1) are those siloxanes of formula (5) wherein $R^1$ is vinyl, $R^2$ is methyl, $R^3$ is hydrogen, a1 is 0 to 1, b1 is 1 to 4, and c1 is 0 to 1, and more desirably a1=0, b1=$_2$ to 4, and c1=0.

Component (B2) is a compound containing in a molecule at least one substituent group of 2 to 10 carbon atoms, preferably 2 to 8 carbon atoms, having a carbon-carbon unsaturated bond (double or triple bond) as functionality, and at least one substituent group having a group capable of addition reaction and/or condensation reaction with an alkenyl group and/or a silicon-bonded hydrogen atom (i.e., SiH group).

The compound as component (B2) possesses at least one substituent group having a carbon-carbon unsaturated bond as functionality, which indicates a substituent group having a functional group capable of radical reaction upon exposure to heat and/or UV. The structure of this substituent group may be either linear or branched, or even a cyclic structure such as cyclohexene or norbornadiene may be used. Any substituent group having a functional group as commonly used in radical polymerization or radical reaction curing systems may be used. Where component (B2) contains a siloxane structure, the substituent group should preferably be a substituent group having a carbon-carbon double bond such as methacryloyloxy or a carbon-carbon triple bond such as acetylene, propynyl or butynyl, especially for restraining consumption by addition reaction.

Where component (B2) is an organic compound free of siloxane structure, it makes an easy access to the substrate and is advantageous for reaction or interaction with the substrate via radical reaction, allowing a choice of the substituent group from a wider range. However, a non-silicone compound having a higher molecular weight is less compatible with silicone so that it may become difficult to acquire a bond or interaction with the non-tacky cured coating, or is little dissolvable in the composition and thus useless. Therefore, the organic compound should preferably have a number average molecular weight of up to 1,000 as measured by GPC versus polystyrene standards. In order for the organic compound to function as a coupling agent more efficiently for improving adhesion, a lower molecular weight is desirable since more bond sites are available over a wide area.

In component (B2), the substituent group having a functional group capable of radical reaction upon exposure to heat and/or UV functions such that component (B2) is anchored to the substrate surface where the composition is coated, through radical reaction and/or interaction with a group created by radical reaction. Creation of radicals may be attained by heat or irradiation of energy ray such as UV. Alternatively a radical generator such as peroxide or a photosensitizer may be added for the purpose of promoting radical creation insofar as the advantages of the invention are not impaired.

Since the substrate is made of organic material, there are present on the substrate numerous structures capable of generating radicals upon exposure to heat or UV or numerous structures capable of reacting with radicals thus

generated. In addition, the substrate has an extremely high rate of absorption of IR or UV radiation as the radical-generating energy source. Thus radicals can be concentratedly generated on the substrate, which is apt to promote reaction with the substrate.

In the case of heat-sensitive substrates such as plastic film, the radical creation technique based on UV irradiation is advantageous in that the temperature of the film substrate is not so elevated. Using UV radiation, the majority of which is absorbed by the film substrate surface, radicals can be concentratedly generated in proximity to the film substrate surface, which is desirable to promote reaction with the film substrate.

The compound as component (B2) also possesses at least one second substituent group. It is a substituent group having a functional group capable of reaction with the alkenyl group in component (A) and/or the SiH group in component (C). The reactions involved herein are addition reaction with SiH group for the alkenyl group in component (A), and condensation reaction with OH group and addition reaction with carbon-carbon double bond for the SiH group in component (C).

The second substituent group in component (B2) functions such that component (B2) is anchored to the non-tacky cured coating through addition and condensation reactions different from the radical reaction of the first substituent group. With this combined with the action of the substituent group for radical reaction, component (B2) functions as a coupling agent of anchoring the non-tacky cured coating and the substrate to each other, thereby improving adhesion.

Where component (B2) is an organic compound free of siloxane structure, it tends to be less compatible with the silicone component so that addition reaction may be retarded. If a substituent group having a carbon-carbon double bond as a functional group capable of reaction with the alkenyl group in component (A) and/or the SiH group in component (C) is selected, then it is consumed by radical reaction prior to addition reaction with the SiH group, with the risk of component (B2) failing to function as the coupling agent. To avoid such inconvenience, a SiH group or hydroxyl group unsusceptible to radical reaction is selected. For example, the compound may be a molecular structure containing a divalent structure having the general formula (6-1), or two divalent structures having the general formulae (6-2) and (6-3).

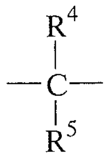

(6-1)

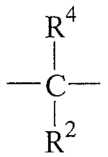

(6-2)

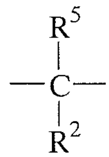

(6-3)

Herein $R^2$ is as defined above, $R^4$ is a substituent group of 2 to 10 carbon atoms, preferably 2 to 8 carbon atoms, containing alkynyl (e.g., acetylene, propynyl or butynyl), acryloyloxy or methacryloyloxy, and $R^5$ is a substituent group having an OH, SiH or alkenyl group as functionality. Of these structures, an industrially desirable example is $HC \equiv C(CH_3)_2$-OH.

Also included are cyclic structures having the general formulae (7-1) and (7-2).

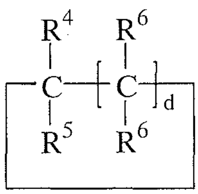

(7-1)

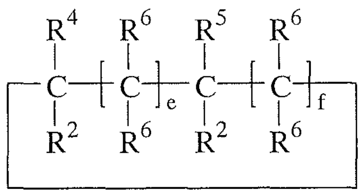

(7-2)

Herein $R^4$ and $R^5$ as defined above, $R^6$ is hydrogen, a saturated hydrocarbon group of 1 to 10 carbon atoms, preferably 1 to 8 carbon atoms, or aromatic group, the same group as $R^4$, or the same group as $R^5$, d is 4 to 10, and e+f is 3 to 9. Of these structures, an industrially desirable example is ethynyl cyclohexanol.

Both components (B1) and (B2) are commonly advantageous in that their molecular weight is low. However, a compound having a very low molecular weight has a risk that it will rapidly volatilize off the composition prior to any reaction when the composition is coated and heated on the substrate. It is thus desired that component (B) have such a molecular weight that its boiling point may be at least 80°C. For mitigating thermal impact, UV irradiation is effective because the temperature is not elevated.

An appropriate amount of component (B) blended is 0.1 to 10 parts by weight, preferably 0.2 to 9 parts by

weight per 100 parts by weight of component (A). Outside the range, a less amount of component (B) achieves no improvement in adhesion whereas a larger amount may adversely affect cure.

Component C

Component (C) is an organohydrogenpolysiloxane containing at least three silicon-bonded hydrogen atoms (i.e., SiH groups) in a molecule. Preferably it has the average compositional formula (10):

$$R^8_fH_gSiO_{(4-f-g)/2} \qquad (10)$$

wherein $R^8$ is as defined above, f is 0 to 3, g is 0 to 3, and f+g is a positive number of 1 to 3.

The molecular structure may be linear, branched or cyclic. The organohydrogenpolysiloxane has an absolute viscosity which may range from several mPa-s to several ten thousand mPa-s at 25°C as measured by a rotational viscometer. Illustrative examples of the organohydrogenpolysiloxane are given below.

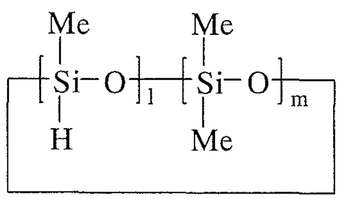

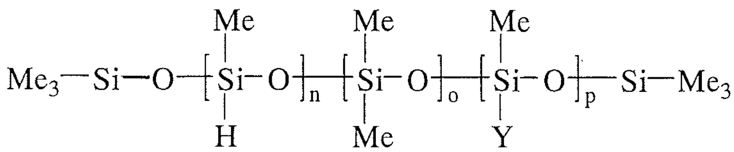

Y = 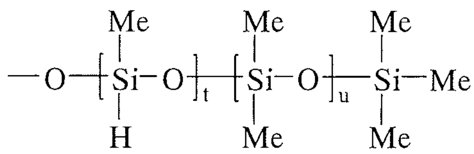

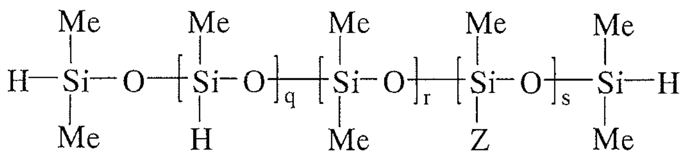

Z = 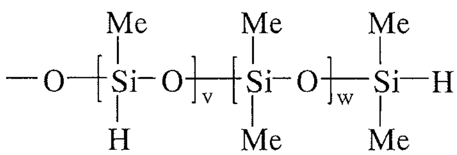

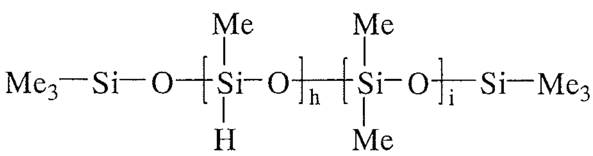

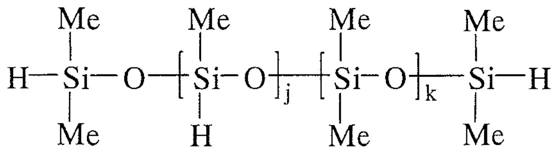

Herein, Me stands for methyl, h, l and n each are a number of 3 to 500, m, p and s each are a number of 1 to 500, i, j, k, o, q, r, t, u, v and w each are a number of 0 to 500.

The organohydrogenpolysiloxane as component (C) is blended in such amounts that the moles of SiH group is 1 to 10 times the total moles of alkenyl group in component (A). If the moles of SiH group in component (C) is less than the lower limit relative to the total moles of alkenyl group in component (A), the composition may not fully cure. If the moles of SiH group in component (C) is more than the upper limit, no further increase in the desired effect is observed and the peeling force may become heavy. Generally speaking, an appropriate amount of component (C) blended is 0.1 to 20 parts by weight per 100 parts by weight of component (A).

Component D

Component (D) is a platinum group metal base catalyst which may be selected from prior art well-known catalysts for addition reaction. Exemplary catalysts include platinum black, chloroplatinic acid, chloroplatinic acid-olefin complexes, chloroplatinic acid-alcohol coordination compounds, rhodium, and rhodium-olefin complexes. The catalyst may be added in a catalytic amount. Preferably the catalyst is added in such an amount as to provide 5 to 1,000 ppm of platinum or rhodium based on the total weight of components (A), (B) and (C), whereby a coating can be fully cured. The amount of the catalyst may be adjusted in accordance with the reactivity of the components or the desired cure rate.

Component E

Component (E) is a surfactant. Included are nonionic surfactants, for example, surfactants of alkyl ether type such as polyoxyethylene lauryl ether and polyoxyethylene tridecyl ether, and surfactants of alkyl ester type such as polyoxyethylene oleate and polyoxyethylene laurate. These nonionic surfactants (or emulsifiers) may be used alone or in admixture of two or more. In order that the silicone emulsion composition be stable, it is desirable that such a nonionic surfactant or a mixture of nonionic surfactants have a HLB (hydrophilic-lipophilic balance) of 10 to 15.

Although anionic and cationic surfactants are also useful, it is desirable to use an anionic or cationic surfactant in combination with a nonionic surfactant because the resulting silicone emulsion is stable and wettable to substrates.

The amount of the surfactant used is desirably a minimum amount sufficient to ensure that the resulting silicone emulsion is stable and wettable to substrates. Specifically, the amount of the surfactant is 0.1 to 20 parts, preferably 0.5 to 15 parts by weight relative to 100 parts by weight of components (A), (B), and (C) combined. Emulsification may be difficult with less than 0.1 pbw of the surfactant whereas more than 20 pbw of the surfactant may interfere with the cure of the silicone emulsion.

A water-soluble resin may be used in combination with the surfactant to facilitate emulsification and improve stability. A choice should be made of those resins having a minimum poisoning effect to the platinum group metal catalyst. A typical water-soluble resin is polyvinyl alcohol. Like the surfactant, the amount of the water-soluble resin used is desirably a minimum amount sufficient to ensure the stability and substrate wettability of the resulting silicone emulsion. Specifically, the amount of the water-soluble resin is 0 to 10 parts, preferably 1 to 10 parts by weight relative to 100 parts by weight of components (A), (B), and (C) combined.

Component F

Component (F) is water. The amount of water used is determined so as to meet an appropriate viscosity for an applicator used in practice and the desired silicone coating weight on a substrate, and thus not particularly limited. Preferably the amount of water is 100 to 10,000 parts by weight per 100 parts by weight of component (A). Less than 100 pbw of water is difficult to form an O/W emulsion whereas more than 10,000 pbw detracts from stability.

Any water can be used herein as long as the impurity concentration of water is approximate to city water. However, it is recommended to avoid water having admixed therein a strong acid, strong base, or an amount of alcohol or salt because such water can detract from the stability of emulsion.

The silicone emulsion composition of the invention may be prepared by any well-known techniques. One preferred procedure is by mixing amounts of components (A) to (E) with a portion of water (F) in a high-shear agitator such as a planetary mixer or combination mixer where emulsification is achieved by phase inversion, and adding the remainder of water (F) for dilution. For each component, a single compound or a mixture of two or more compounds

may be used.

Desirably, the platinum group metal catalyst as component (D) is not emulsified at the same time as the other components. Once an emulsion is prepared from components (A) to (C), (E) and (F), component (D) is added to the emulsion immediately before use. It is also preferred that the platinum group metal catalyst be dispersed in water prior to addition. For example, the catalyst may be processed into an emulsion form by premixing with a surfactant or otherwise.

In addition to the foregoing components, optional components may be added to the composition. For example, catalyst inhibitors such as organic nitrogen compounds, organic phosphorus compounds, acetylene derivatives, oxime compounds, and organic halides may be added for the purpose of inhibiting the catalytic activity of the platinum group metal catalyst; leveling agents such as silicone resins, silica, organopolysiloxanes free of silicon-bonded hydrogen or alkenyl group, and fluorochemical surfactants may be added for the purpose of controlling release properties; thickeners such as water-soluble polymers, e.g., methyl cellulose and polyvinyl alcohol may be added; and radical generators such as peroxides or photosensitizers may be added for the purpose of promoting reaction. These optional components may be added in commonly used amounts insofar as the advantages of the invention are not impaired.

The composition is coated onto a substrate such as paper or plastic film directly or after diluting with a suitable organic solvent, by any well-known coating techniques, for example, using a bar coater, roll coater, reverse coater, gravure coater, air knife coater, or if thin-film coating is desired, a high-precision offset coater or multi-stage roll coater. Examples of the substrate include paper sheets such as glassine paper, polyethylene-laminated paper, kraft paper, clay-coated paper, and mirror-coated paper, and plastic films of polypropylene, polyethylene, polyethylene terephthalate (PET), polyvinyl chloride and the like.

The coating weight of the composition on the substrate varies with the type of the substrate material. The preferred coating weight is in a range of 0.05 to 5 g/m$^2$ as solids. The substrate coated with the composition is heated at 80 to 150°C for 5 to 60 seconds to form a cured coating on the substrate surface, obtaining a release paper or film. The cure takes place by way of addition reaction between components (A), (B) and (C), and at the same time, heat-induced radical reaction enhances bond-formation and interaction between component (B) and the substrate. As a result, a silicone coating having good release properties, improved adhesion and film strength is formed on the paper or film substrate surface. When UV radiation is applied in combination with heat, radical reaction in proximity to the paper or film substrate surface can be efficiently promoted without an excess elevation of temperature, facilitating preparation of release paper or film featuring high adhesion. For UV irradiation, any commercially available lamps or bulbs such as mercury lamps, metal halide lamps and fusion lamps may be used. Since the film substrate has a high absorption coefficient at 300 nm or shorter, those lamps or bulbs having a wavelength distribution containing more fractions of 300 nm or shorter wavelength are effective. An integral dose is 10 to 500 mJ/cm$^2$, which is obtained by irradiation, for example, from one or two 120-W lamps at a line speed of 10 to 100 m/min. Although heat and UV may be simultaneously applied, advantageously they are separately applied because a simple apparatus may be used. Depending on the structure of component (B) or the blending proportion of component (B) relative to other components, better results are obtained when heating is followed by UV irradiation, or when UV irradiation is followed by heating. Where component (B) contains a siloxane structure, the procedure of UV irradiation followed by heating is often effective. An effective procedure may be selected in accordance with a particular situation.

## EXAMPLE

Examples of the invention are given below by way of illustration and not by way of limitation. All parts are by weight (pbw). Me stands for methyl, and Vi for vinyl. The viscosity is an absolute viscosity measured at 25°C by a rotational viscometer.

### Preparation Example 1

Preparation of platinum complex-loaded polysiloxane emulsion

A 5-L combined emulsifier comprising an anchor mixer capable of agitation throughout the vessel and a rotating disc having alternately upward and downward raised small teeth arranged along its circumference (T.K. CombiMix® Model M, Primix Corp.) was charged with 1,000 parts of a platinum-vinyl siloxane complex salt (platinum content: 5,000 ppm of Pt), 20 parts of a polyoxyethylene alkyl ether surfactant (HLB 13.6, pH 5.4, ion conductivity 9.8 μS/cm), 50 parts of polyvinyl alcohol having a degree of saponification of 90 mol% and a viscosity of 30 mPa-s at 20°C in 4 wt% aqueous solution, and 3,930 parts of water. The ingredients were agitated and mixed until uniform. This was further blended by a homogenizer, obtaining a homogeneous O/W emulsion composition having a platinum content of 1,000 ppm.

Examples 1 to 11 & Comparative Examples 1 to 5

A 5-L combined emulsifier comprising an anchor mixer capable of agitation throughout the vessel and a rotating disc having alternately upward and downward raised small teeth arranged along its circumference (T.K. CombiMix® Model M, Primix Corp.) was charged with the amounts indicated in Table 1 of components (A), (B), (C) and (F), 2 parts of a polyoxyethylene alkyl ether surfactant (HLB 13.6, pH 5.4, ion conductivity 9.8 μS/cm) as component (E), 2 parts of polyvinyl alcohol having a degree of saponification of 90 mol% and a viscosity of 30 mPa-s at 20°C in 4 wt% aqueous solution as thickener, and 0.5 part of ethynyl cyclohexanol as reaction inhibitor. The ingredients were agitated and mixed until uniform. This was further blended by a homogenizer, obtaining a homogeneous O/W emulsion having a silicone content of 5 wt%.

To 1,000 parts of the emulsion was added 5 parts of the platinum complex-loaded polysiloxane emulsion in Preparation Example 1 as component (D). They were mixed to form a coating composition.

Using the composition, a release film was manufactured and evaluated according to the evaluation method described later. Specifically the curing step included UV irradiation from two 80-W UV lamps at a line speed of 40 m/min and a height of 30 cm in an integral dose of 50 mJ/cm$^2$ and subsequent heating in a hot air circulating dryer for a predetermined time until a cured coating was formed.

Examples 12 and 13

A coating composition was prepared as in Example 1. Using the composition, a release film was manufactured and evaluated according to the evaluation method described later. Specifically the curing step included heating in a hot air circulating dryer for a predetermined time and subsequent UV irradiation from two 120-W UV lamps at a line speed of 30 m/min and a height of 30 cm in an integral dose of 100 mJ/cm$^2$ until a cured coating was formed.

The components in Table 1 are identified below.

--Component A

(A-1) organopolysiloxane, viscosity 0.2 Pa-s, Vi content 0.026 mol/100 g

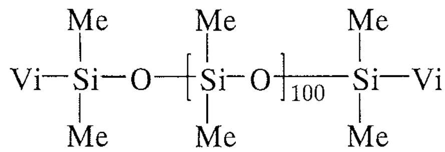

(A-2) organopolysiloxane, viscosity 0.1 Pa-s, Vi content 0.043 mol/100 g

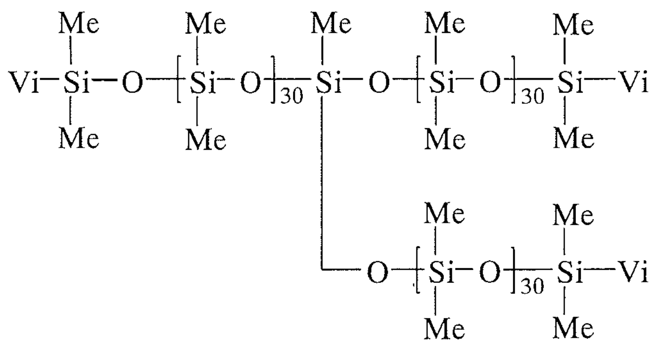

--Component B

(B1-1) siloxane, viscosity 5 mPa-s, Vi content 1.2 mol/100 g

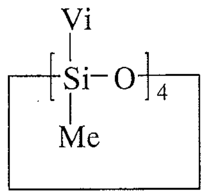

(B1-2) siloxane, viscosity 5 mPa-s, Vi content 0.63 mol/100 g

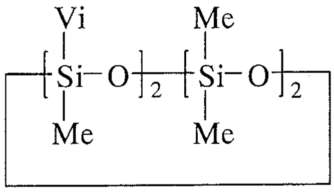

(B1-3) siloxane, viscosity 10 mPa-s, Vi content 0.6 mol/100 g

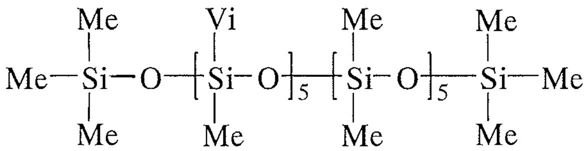

(B1-4) siloxane, viscosity 6 mPa-s, Vi content 0.7 mol/100 g

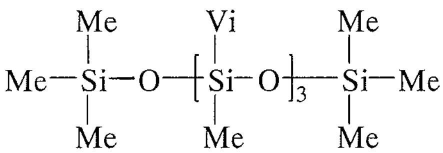

(B1-5) siloxane, viscosity 0.02 Pa-s, alkenyl content 0.33 mol/100 g

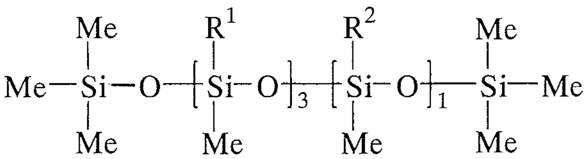

$R^1$ is $-CH_2CH_2CH_2-O-CO-(CH_3)C=CH_2$ (127).
$R^2$ is $-CH_2CH_2CH_2-O-CH_2CH_2-OH$ (106).

(B1-6) siloxane, viscosity 6 mPa-s, alkenyl content 0.49 mol/100 g

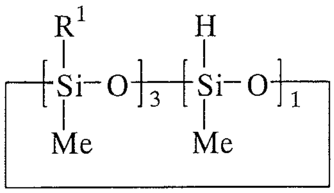

$R^1$ is $-CH_2CH_2CH_2-O-CO-(CH_3)C=CH_2$ (127).
(B1-7) siloxane, viscosity 5 mPa-s, Vi content 0.32 mol/100 g

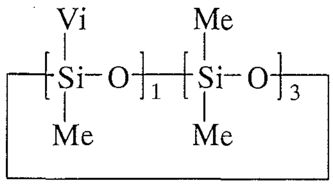

(B1-8) siloxane, viscosity 6 mPa-s, Vi content 0.32 mol/100 g

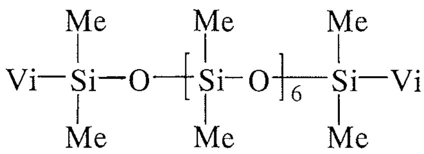

(B1-9) siloxane, viscosity 0.05 Pa-s, Vi content 0.25 mol/100 g

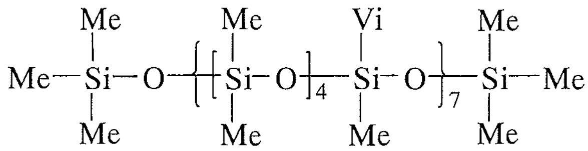

(B1-10) siloxane, viscosity 0.01 Pa-s, Vi content 0.70 mol/100 g

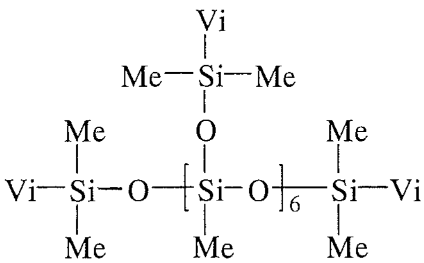

(B1-11) siloxane, viscosity 30 mPa-s, alkenyl content 0.58 mol/100 g

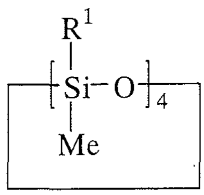

$R^1$ is $-CH_2CH_2CH_2-O-CO-CH=CH_2$ (113).

(B2-1) acetylene alcohol, 3-methyl-1-butyn-3-ol

(B2-2) acetylene alcohol, 3,5-dimethyl-1-hexyn-3-ol

(B2-3) acetylene alcohol, 1-ethynyl-1-cyclohexanol

(B2-4) acetylene compound, 1-octyne

--Component C

(C-1) methylhydrogenpolysiloxane, viscosity 25 mPa-s, H content 1.5 mol/100 g

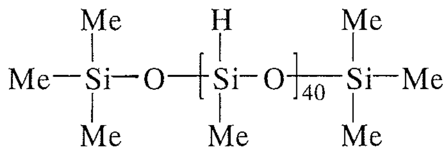

(C-2) methylhydrogenpolysiloxane, viscosity 60 mPa-s, H content 1.00 mol/100 g

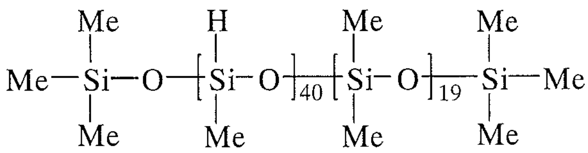

Table 1

| | | Component (pbw) | | | | | Cure (sec) | Peeling force (N) | Adhesion | |
|---|---|---|---|---|---|---|---|---|---|---|
| | | A | B1 | B2 | C | F | | | PET | OPP |
| Example | 1 | A-1 100 | B1-1 2 | | C-1 4 | water 2,010 | 20 | 0.4 | ○ | ○ |
| | 2 | A-1 100 | B1-2 4 | | C-1 6 | water 2,086 | 20 | 0.5 | ○ | ○ |
| | 3 | A-1 100 | B1-3 4 | | C-1 6 | water 2,086 | 20 | 0.5 | ○ | ○ |
| | 4 | A-2 100 | B1-4 4 | | C-2 9 | water 2,143 | 20 | 0.6 | ○ | ○ |
| | 5 | A-2 100 | B1-5 2 | | C-2 8 | water 2,086 | 20 | 0.5 | ○ | ○ |
| | 6 | A-2 100 | B1-6 2 | | C-2 7 | water 2,067 | 20 | 0.5 | ◎ | ◎ |
| | 7 | A-1 100 | B1-10 4 | | C-1 5 | water 2,067 | 20 | 0.5 | ◎ | ◎ |
| | 8 | A-1 100 | B1-11 2 | | C-1 5 | water 2,029 | 20 | 0.5 | ◎ | ◎ |
| | 9 | A-1 100 | | B2-1 1 | C-1 4 | water 1,971 | 20 | 0.4 | ○ | ○ |
| | 10 | A-2 100 | | B2-2 0.5 | C-1 5 | water 1,990 | 20 | 0.4 | ○ | ○ |
| | 11 | A-2 100 | B1-1 2 | B2-3 0.3 | C-2 10 | water 2,123 | 20 | 0.4 | ◎ | ◎ |
| | 12 | A-2 100 | B1-10 4 | | C-1 7 | water 2,105 | 20 | 0.5 | ○ | ○ |
| | 13 | A-2 100 | B1-11 2 | | C-1 6 | water 2,048 | 20 | 0.5 | ○ | ○ |
| Comparative Example | 1 | A-1 100 | B1-1 0.05 | | C-1 4 | water 1,972 | 20 | 0.4 | △ | △ |
| | 2 | A-1 100 | B1-7 4 | | C-1 4 | water 2,048 | 20 | 0.5 | × | × |
| | 3 | A-2 100 | B1-8 4 | | C-2 8 | water 2,124 | 20 | 0.6 | × | × |
| | 4 | A-2 100 | B1-9 4 | | C-2 8 | water 2,124 | 20 | 0.5 | × | × |
| | 5 | A-2 100 | | B2-4 0.5 | C-1 6 | water 2,009 | 20 | 0.6 | × | × |

Example 9 and Example 10 are both Comparative Examples.

Evaluation method

Evaluation of test items and expression of results are as follows.

(1) Cure

A composition was coated onto a PET film of 40 μm thick to a coating weight of 0.5 g/$m^2$ as solids by means of a bar coater. The coating was UV irradiated under two 80-W UV lamps at a line speed of 40 m/min and a height of 30 cm to an integral dose of 50 mJ/$cm^2$ and heat treated in a hot air circulating dryer at 110°C for a predetermined time. A time passed until a completely cured coating was formed was measured. The coating being cured was examined by rubbing the coating surface with the finger and judged "completely cured" when the coating was not hazy on the surface or crumbled off.

(2) Peeling force

A composition was coated onto a PET film of 40 μm thick to a coating weight of 0.5 g/$m^2$ as solids by means of a bar coater. As in Examples, the coating was UV irradiated under two 80-W or 120-W UV lamps at a line speed of 40 m/min or 30 m/min and a height of 30 cm to an integral dose of 50 mJ/$cm^2$ or 100 mJ/$cm^2$ and heat treated in a hot air circulating dryer at 110°C for 30 seconds. In this way, a cured coating was formed, obtaining a test separator.

The separator was allowed to stand at 25°C and 50% RH for one day, after which a solvent type acrylic pressure-sensitive adhesive (Oribain BPS-5127, Toyo Ink Mfg. Co., Ltd.) was coated onto the cured coating surface and heat treated at 100°C for 3 minutes. Next, a PET film of 40 μm was laid on the treated surface, pressed by rolling once back and forth a roller of 2 kg, and aged at 25°C for 20 hours. The sample was cut into a strip of 5 cm wide. Using a tensile tester, the force (N) required to peel the overlying PET film from the separator at an angle of 180° and a pull rate of 0.3 m/min was measured as adhesive strength. The tester used was autograph DCS-500 (Shimadzu Mfg. Co., Ltd.).

(3) Adhesion

A PET film (40 μm) substrate separator prepared as in (2) and another separator prepared as in (2) using a corona-treated OPP film (40 μm) as the substrate were aged under predetermined conditions. After a certain aging period (days), the separator was examined whether the coating surface became hazy and rubbed off when the surface of the cured coating was rubbed with the finger.

The sample which showed haze or rub-off after aging at 40°C and 80% RH for one day was rated poor (×). The sample which showed haze or rub-off after aging at 40°C and 80% RH for 3 days was rated fair (Δ). The sample which did not show haze or rub-off even after aging at 40°C and 80% RH for one month was rated good (○). The sample which did not show haze or rub-off even after aging at 60°C and 90% RH for one month was rated excellent (◎).

<u>Note</u>

In respect of numerical ranges disclosed in the present description it will of course be understood that in the normal way the technical criterion for the upper limit is different from the technical criterion for the lower limit, i.e. the upper and lower limits are intrinsically distinct proposals.

## Claims

1. An addition curing silicone emulsion composition for release paper or film, comprising

   (A) 100 parts by weight of an organopolysiloxane containing at least two alkenyl groups in a molecule and having an absolute viscosity of at least 0.04 Pa-s at 25°C,
   (B) 0.1 to 10 parts by weight of an adhesion promoter which is

      (B1) organopolysiloxane containing at least two silicon-bonded alkenyl-containing substituent groups in a molecule, having an alkenyl content of 0.3 to 2.0 mol/100g, a viscosity less than 0.04 Pa.s at 25°C, and having a structure in which two siloxane units in which alkenyl-containing substituent group is bonded to silicon atom are linked directly, or are linked via not more than 3 intervening siloxane units not having alkenyl-containing substituent group bonded to silicon atom, and optionally
      (B2) a compound containing in a molecule at least one substituent group of 2 to 10 carbon atoms having a carbon-carbon unsaturated bond (double or triple bond) as functionality, and also at least one second substituent group having a functional group capable of addition reaction and/or condensation reaction with the alkenyl group in component (A) and/or with a silicon-bonded hydrogen atom in component (C),

(C) 0.1 to 20 parts by weight of an organohydrogenpolysiloxane containing at least three silicon-bonded hydrogen atoms in a molecule,
(D) a catalytic amount of platinum group element-based catalyst,
(E) surfactant in an amount of 0.1 to 20 parts by weight relative to 100 parts by weight of components (A), (B) and (C) combined, and
(F) 100 to 10,000 parts by weight of water, the composition being curable by heat and UV irradiation in combination.

**2.** The silicone emulsion composition of claim 1 comprising as component (B1) an organopolysiloxane represented by the compositional formula (1) including a structure of the general formula (2), and having an average degree of polymerization of 2 to 50,

$$[M]_{m1}[M^A]_{m2}[D]_{d1}[D^A]_{d2}[T]_{t1}[T^A]_{t2}[Q]_{q1} \qquad (1)$$

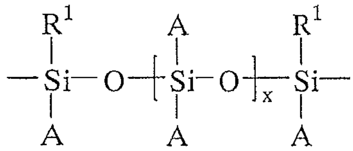
(2)

wherein $R^1$ is alkenyl-containing substituent group of 2 to 10 carbon atoms, A is $R^2$ or a siloxane residue bonded via an oxygen atom and selected so as to meet formula (1), two A groups may form a cyclic structure as $-O(SiR^2{}_2O)_y-$, $R^2$ is substituted or unsubstituted monovalent hydrocarbon group of 1 to 10 carbon atoms, x is an integer of 0 to 3, y is an integer selected such that the organopolysiloxane of formula (1) may have an average degree of polymerization of 2 to 50,
M, $M^A$, D, $D^A$, T, $T^A$ and Q are siloxane units as defined below, $O_{1/2}$ denoting linkage to an adjacent siloxane unit via the oxygen atom and $R^1$ and $R^2$ being as defined above,

M and $M^A$ each are:

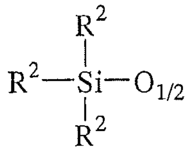
,

$M^A$ being a unit in which at least one $R^2$ is $R^1$,
D and $D^A$ each are:

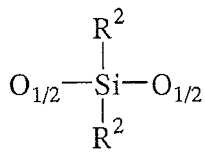
,

$D^A$ being a unit in which at least one $R^2$ is $R^1$,
T and $T^A$ each are:

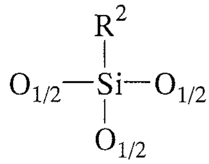
,

$T^A$ being a unit in which $R^2$ is $R^1$,
Q is:

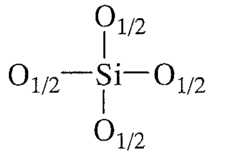 ,

m1, m2, d1, d2, t1, t2 and q1 are numbers satisfying the following relations:

$$t1+t2+2\times q1 \leq m1+m2 \leq 2+t1+t2+2\times q1$$

$$0 \leq d1+d2 \leq 48,\ 0 \leq t1+t2 \leq 30,\ 0 \leq q1 \leq 20,$$

$$0.25 \leq (m2+d2+t2)/(m1+m2+d1+d2+t1+t2+q1) \leq 1.$$

**3.** The silicone emulsion composition of claim 2 wherein x in formula (2) is 0 or 1.

**4.** The silicone emulsion composition of claim 2 or 3 wherein component (B1) is a compound of linear or branched siloxane structure having the general formula (3) or (4):

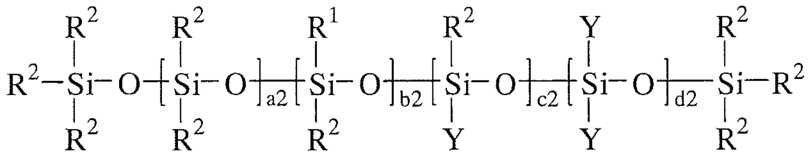 (3)

wherein $R^1$ and $R^2$ are as defined above, Y is a group of the following formula (3a):

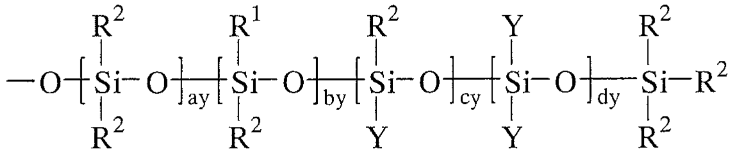 (3a)

wherein $R^1$, $R^2$ and Y are as defined above,
a2, b2, ay, and by each are an integer of 0 to 48, c2 and cy each are an integer of 0 to 30, d2 and dy each are an integer of 0 to 20,
formulae (3) and (3a) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom,

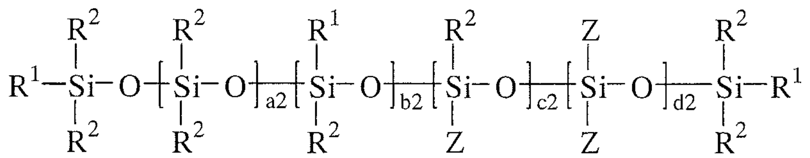 (4)

wherein $R^1$ and $R^2$ are as defined above, Z is a group of the following formula (4a):

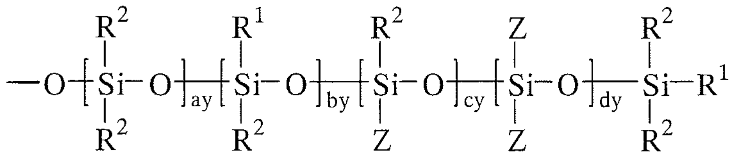 (4a)

wherein $R^1$, $R^2$ and Z are as defined above,
a2, b2, ay, and by each are an integer of 0 to 48, c2 and cy each are an integer of 0 to 30, d2 and dy each are an integer of 0 to 20,
formulae (4) and (4a) each denote a random structure and include at least one structure that two siloxane units in which the alkenyl-containing substituent group $R^1$ is bonded to silicon atom are linked directly or via up to 3 intervening siloxane units in which $R^1$ is not bonded to silicon atom.

**5.** The silicone emulsion composition of claim 2 or 3 wherein component (B1) is a compound of cyclic siloxane structure having the general formula (5):

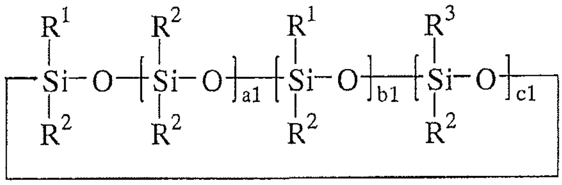

(5)

wherein $R^1$ and $R^2$ are as defined above, $R^3$ is a substituent group having an OH or SiH group as functionality or a substituted or unsubstituted monovalent hydrocarbon group of 1 to 10 carbon atoms free of aliphatic unsaturation, a1 is 0 or 1, b1 is an integer of 1 to 6, c1 is an integer of 0 to 5, and a1+b1+c1 is an integer of at least 2.

**6.** A silicone emulsion composition of any one of claims 2 to 5 in which groups $R^1$ of component (B1) are vinyl, allyl or (meth)acryloyloxy-substituted alkyl groups.

**7.** A silicone emulsion composition of any one of the preceding claims comprising organopolysiloxane (B1) which contains at least three alkenyl groups per molecule.

**8.** A silicone emulsion composition of any one of the preceding claims comprising organopolysiloxane (B1) in which all siloxane units in which the alkenyl-containing substituent group is bonded to silicon atom are said siloxane units which are linked directly or are linked via not more than 3 intervening siloxane units not having alkenyl-containing substituent group bonded to silicon atom.

**9.** The silicone emulsion composition of claim 1 comprising as component (B2) a compound containing a divalent structural unit having the general formula (6-1), a compound containing divalent structural units having the general formulae (6-2) and (6-3), a compound of cyclic structure having the general formula (7-1), or a compound of cyclic structure having the general formula (7-2):

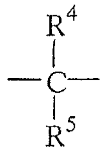

(6-1)

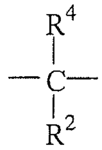

(6-2)

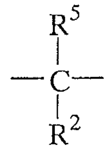

(6-3)

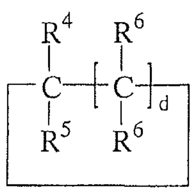

(7-1)

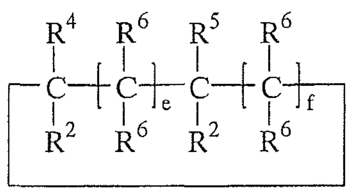

(7-2)

wherein $R^2$ is a substituted or unsubstituted monovalent hydrocarbon group of 1 to 10 carbon atoms, $R^4$ is a substituent group of 2 to 10 carbon atoms containing alkynyl, acryloyloxy or methacryloyloxy, $R^5$ is a substituent

group having an OH, SiH or alkenyl group as functionality, $R^6$ is hydrogen, a saturated hydrocarbon group of 1 to 10 carbon atoms or aromatic group, the same group as $R^4$, or the same group as $R^5$, d is 4 to 10, and e+f is 3 to 9.

**10.** A silicone emulsion composition of claim 9 in which component (B2) is an acetylene alcohol.

**11.** A silicone emulsion composition of any one of the preceding claims in which component (A) is an organopolysiloxane with a structure having the general formula (8)

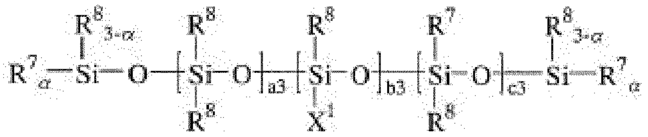
(8)

wherein $R^7$ is alkenyl, $R^8$ is a monovalent organic group free of aliphatic unsaturation or a hydroxyl group, $X^1$ is a group of formula (9)

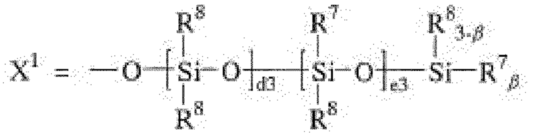
(9)

and wherein a3, b3, c3, d3, and e3 are such positive numbers that the organopolysiloxane has a viscosity of at least 0.04 Pa-s at 25°C and a viscosity in 30 wt% toluene solution of up to 70 Pa-s at 25°C, b3, c3, d3, and e3 may be 0, and $\alpha$ and $\beta$ each are 0 or an integer of 1 to 3.

**12.** A method for preparing a release paper or film, comprising the steps of
coating a silicone emulsion composition of any one of claims 1 to 11 directly onto a paper or plastic film substrate, and applying heat and UV radiation to cure the coating.

**13.** A method of claim 12 wherein the step of applying heat and UV radiation includes UV irradiation and subsequent heating to cure the coating.

**14.** A release paper or film comprising a cured coating of the silicone emulsion composition of any one of claims 1 to 11.

**15.** A release film according to claim 14 in which the cured coating is on a plastic film substrate of polypropylene, polyethylene, polyethylene terephthalate or polyvinyl chloride.

**Patentansprüche**

**1.** Additionshärtende Silikonemulsionszusammensetzung für ein Trennpapier oder eine Trennfolie, wobei die Zusammensetzung Folgendes umfasst:

(A) 100 Gewichtsteile eines Organopolysiloxans, das zumindest zwei Alkenylgruppen pro Molekül enthält und eine absolute Viskosität bei 25 °C von zumindest 0,04 Pa·s aufweist,
(B) 0,1 bis 10 Gewichtsteile eines Haftvermittlers, der Folgendes ist:

(B1) Organopolysiloxan, das zumindest zwei Silicium-gebundene alkenylhältige Substituentengruppen pro Molekül enthält, mit einem Alkenylgehalt von 0,3 bis 2,0 mol/100 g, einer Viskosität bei 25 °C von weniger als 0,04 Pa·s und einer Struktur, in der zwei Siloxaneinheiten, in denen die alkenylhältige Substituentengruppe an das Siliciumatom gebunden ist, direkt verbunden sind oder über nicht mehr als drei dazwischenliegende Siloxaneinheiten verbunden sind, die keine an ein Siliciumatom gebundene alkenylhältige Substituentengruppe aufweisen, und gegebenenfalls
(B2) eine Verbindung, die pro Molekül zumindest eine Substituentengruppe mit 2 bis 10 Kohlenstoffatomen und einer ungesättigten Kohlenstoff-Kohlenstoff-Bindung (Doppel- oder Dreifachbindung) als Funktionalität sowie zumindest eine zweite Substituentengruppe mit einer funktionellen Gruppe enthält, die zu einer

Additionsreaktion und/oder Kondensationsreaktion mit der Alkenylgruppe in Komponente (A) und/oder mit einem siliciumgebundenen Wasserstoffatom in Komponente (C) in der Lage ist,

(C) 0,1 bis 20 Gewichtsteile eines Organohydrogenpolysiloxans, das zumindest drei siliciumgebundene Wasserstoffatome pro Molekül enthält,
(D) eine katalytische Menge eines Katalysators auf Basis eines Platingruppen-Elements,
(E) ein Tensid in einer Menge von 0,1 bis 20 Gewichtsteilen, bezogen auf 100 Gewichtsteile der Komponenten (A), (B) und (C) zusammen, und
(F) 100 bis 10.000 Gewichtsteile Wasser,

wobei die Zusammensetzung durch eine Kombination von Wärme und UV-Strahlung härtbar ist.

**2.** Silikonemulsionszusammensetzung nach Anspruch 1, die als Komponente (B1) ein Organopolysiloxan der Zusammensetzungsformel (1) umfasst, das eine Struktur der allgemeinen Formel (2) umfasst und einen mittleren Polymerisationsgrad von 2 bis 50 aufweist,

$$[M]_{m1}[M^A]_{m2}[D]_{d1}[D^A]_{d2}[T]_{t1}[T^A]_{t2}[Q]_{q1} \quad (1)$$

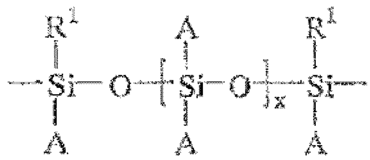

(2)

worin $R^1$ eine alkenylhältige Substituentengruppe mit 2 bis 10 Kohlenstoffatomen ist; A $R^2$ oder ein über ein Sauerstoffatom gebundener Siloxanrest ist und so ausgewählt ist, dass es Formel (1) entspricht, wobei zwei Gruppen A gegebenenfalls eine zyklische Struktur der Form $-O(SiR^2{}_2O)_y-$ bilden; $R^2$ eine substituierte oder unsubstituierte einwertige Kohlenwasserstoffgruppe mit 1 bis 10 Kohlenstoffatomen ist; x eine ganze Zahl von 0 bis 3 ist; y eine ganze Zahl ist, die so ausgewählt ist, dass das Organopolysiloxan der Formel (1) einen mittleren Polymerisationsgrad von 2 bis 50 aufweisen kann; M, $M^A$, D, $D^A$, T, $T^A$ und Q nachstehend definierte Siloxaneinheiten sind; $O_{1/2}$ eine Bindung an eine benachbarte Siloxaneinheit über das Sauerstoffatom bezeichnet;
und $R^1$ und $R^2$ wie oben definiert sind, wobei M und $M^A$ jeweils

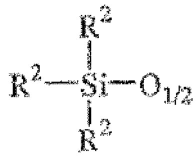

sind,
wobei $M^A$ eine Einheit ist, in der zumindest ein $R^2$ $R^1$ ist, D und $D^A$ jeweils

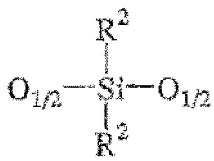

sind,
wobei $D^A$ eine Einheit ist, in der zumindest ein $R^2$ $R^1$ ist, T und $T^A$ jeweils

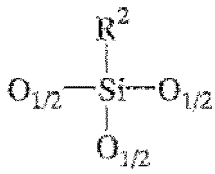

sind,
wobei $T^A$ eine Einheit ist, in der $R^2$ $R^1$ ist, Q

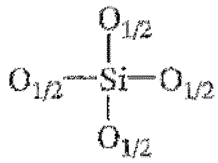

ist,
worin m1, m2, d1, d2, t1, t2 und q1 Zahlen sind, die folgende Beziehungen erfüllen:

$$t1+t2+2xq1 \leq m1+m2 \leq 2+t1+t2+2xq1$$

$$0 \leq d1+d2 \leq 48,\ 0 \leq t1+t2 \leq 30,\ 0 \leq q1 \leq 20,$$

$$0{,}25 \leq (m2+d2+t2)/(m1+m2+d1+d2+t1+t2+q1) \leq 1.$$

**3.** Silikonemulsionszusammensetzung nach Anspruch 2, wobei x in Formel (2) 0 oder 1 ist.

**4.** Silikonemulsionszusammensetzung nach Anspruch 2 oder 3, wobei Komponente (B1) eine Verbindung mit einer unverzweigten oder verzweigten Siloxanstruktur der allgemeinen Formel (3) oder (4) ist:

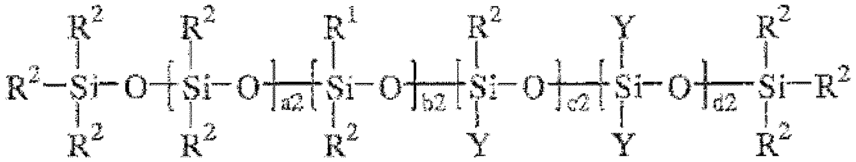

(3)

worin $R^1$ und $R^2$ wie oben definiert sind, Y eine Gruppe der folgenden Formel (3a) ist:

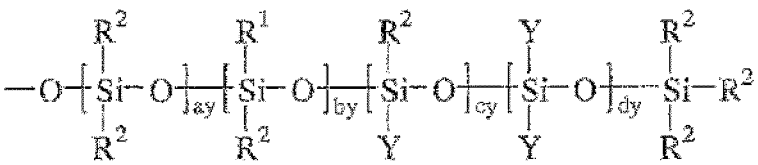

(3a)

worin $R^1$, $R^2$ und Y wie oben definiert sind,
a2, b2, ay und by jeweils eine ganze Zahl von 0 bis 48 sind, c2 und cy jeweils eine ganze Zahl von 0 bis 30 sind, d2 und dy jeweils eine ganze Zahl von 0 bis 20 sind,
wobei die Formeln (3) und (3a) jeweils eine zufällige Struktur bezeichnen und zumindest eine Struktur umfassen, in der zwei Siloxaneinheiten, in denen die alkenylhältige Substituentengruppe $R^1$ an ein Siliciumatom gebunden ist, direkt oder über bis zu drei dazwischenliegende Siloxaneinheiten verbunden sind, in denen $R^1$ nicht an ein Siliciumatom gebunden ist,

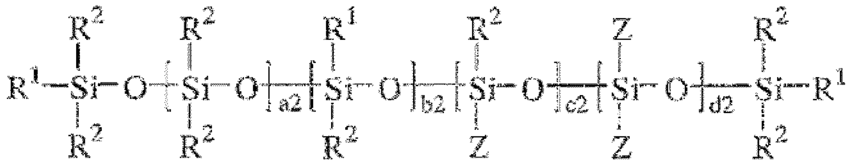

(4)

worin $R^1$ und $R^2$ wie oben definiert sind, Z eine Gruppe der folgenden Formel (4a) ist:

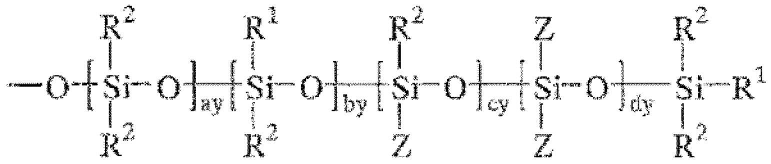

(4a)

worin $R^1$, $R^2$ und Z wie oben definiert sind,
a2, b2, ay und by jeweils eine ganze Zahl von 0 bis 48 sind, c2 und cy jeweils eine ganze Zahl von 0 bis 30 sind, d2 und dy jeweils eine ganze Zahl von 0 bis 20 sind,
die Formeln (4) und (4a) jeweils eine zufällige Struktur bezeichnen und zumindest eine Struktur umfassen, in der zwei Siloxaneinheiten, in denen die alkenylhältige Substituentengruppe $R^1$ an ein Siliciumatom gebunden ist, direkt oder über bis zu drei dazwischenliegende Siloxaneinheiten verbunden sind, in denen $R^1$ nicht an ein Siliciumatom gebunden ist.

**5.** Silikonemulsionszusammensetzung nach Anspruch 2 oder 3, wobei Komponente (B1) eine Verbindung mit zyklischer Siloxanstruktur der allgemeinen Formel (5) ist:

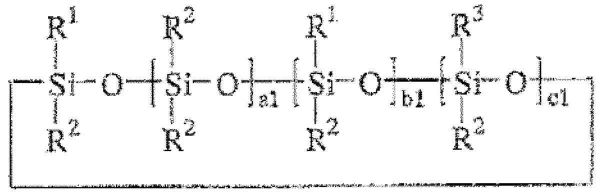

(5)

worin $R^1$ und $R^2$ wie oben definiert sind, $R^3$ eine Substituentengruppe mit einer OH-oder SiH-Gruppe als Funktionalität oder eine substituierte oder unsubstituierte einwertige Kohlenwasserstoffgruppe mit 1 bis 10 Kohlenstoffatomen frei von aliphatischen Unsättigungen ist, a1 = 0 oder 1 ist, b1 eine ganze Zahl von 1 bis 6 ist, c1 eine ganze Zahl von 0 bis 5 ist, und a1+b1+c1 eine ganze Zahl von zumindest 2 ergibt.

**6.** Silikonemulsionszusammensetzung nach einem der Ansprüche 2 bis 5, wobei die Gruppen $R^1$ von Komponente (B1) mit Vinyl, Allyl oder (Meth)acryloyloxy substituierte Alkylgruppen sind.

**7.** Silikonemulsionszusammensetzung nach einem der vorangegangenen Ansprüche, die ein Organopolysiloxan (B1) umfasst, das zumindest drei Alkenylgruppen pro Molekül enthält.

**8.** Silikonemulsionszusammensetzung nach einem der vorangegangenen Ansprüche, die ein Organopolysiloxan (B1) umfasst, in dem alle Siloxaneinheiten, in denen die alkenylhältige Substituentengruppe an ein Siliciumatom gebunden ist, jene Siloxaneinheiten sind, die direkt oder über bis zu drei dazwischenliegende Siloxaneinheiten verbunden sind, die keine an ein Siliciumatom gebundene alkenylhältige Substituentengruppe aufweisen.

**9.** Silikonemulsionszusammensetzung nach Anspruch 1, die als Komponente (B2) Folgendes umfasst: eine Verbindung, die eine zweiwertige Struktureinheit der allgemeinen Formel (6-1) enthält, eine Verbindung, die zweiwertige Struktureinheiten der allgemeinen Formeln (6-2) und (6-3) enthält, eine Verbindung mit zyklischer Struktur der allgemeinen Formel (7-1) oder eine Verbindung mit zyklischer Struktur der allgemeinen Formel (7-2):

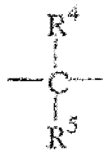 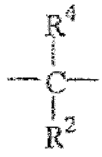 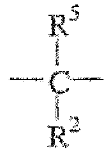

(6-1) (6-2) (6-3)

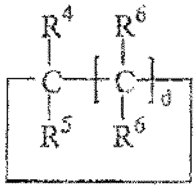 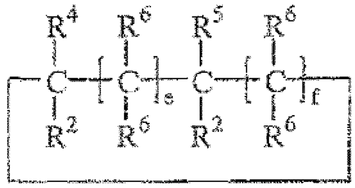

(7-1) (7-2)

worin $R^2$ eine substituierte oder unsubstituierte einwertige Kohlenwasserstoffgruppe mit 1 bis 10 Kohlenstoffatomen ist; $R^4$ eine Substituentengruppe mit 2 bis 10 Kohlenstoffatomen ist, die Alkinyl, Acryloyloxy oder Methacryloyloxy enthält; $R^5$ eine Substituentengruppe mit einer OH-, SiH- oder Alkenylgruppe als Funktionalität ist; $R^6$ Wasserstoff, eine gesättigte Kohlenwasserstoffgruppe mit 1 bis 10 Kohlenstoffatomen oder eine aromatische Gruppe, dieselbe Gruppe wie $R^4$ oder dieselbe Gruppe wie $R^5$ ist; d = 4 bis 10 ist; und e+f = 3 bis 9 ist.

**10.** Silikonemulsionszusammensetzung nach Anspruch 9, wobei Komponente (B2) ein Acetylenalkohol ist.

**11.** Silikonemulsionszusammensetzung nach einem der vorangegangenen Ansprüche, wobei Komponente (A) ein Organopolysiloxan mit einer Struktur der allgemeinen Formel (8) ist:

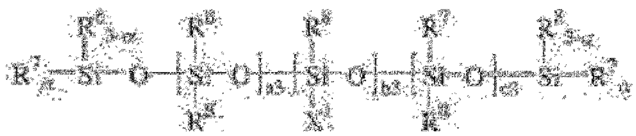 (8)

worin $R^7$ Alkenyl ist; $R^8$ eine einwertige organische Gruppe frei von aliphatischen Unsättigungen oder eine Hydroxylgruppe ist; $X^1$ eine Gruppe der Formel (9) ist:

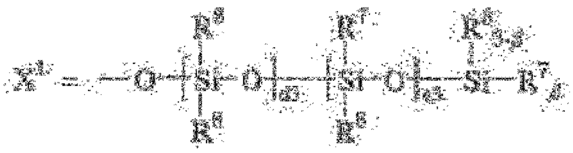 (9)

worin a3, b3, c3, d3 und e3 jeweils solche positiven Zahlen sind, dass das Organopolysiloxan eine Viskosität von zumindest 0,04 Pa·s bei 25 °C aufweist und in 30 gew.-%iger Toluollösung eine Viskosität bei 25 °C von bis zu 70 Pa·s aufweist, wobei b3, c3, d3 und e3 = 0 sein können; und $\alpha$ und $\beta$ jeweils 0 oder eine ganze Zahl von 1 bis 3 sind.

**12.** Verfahren zur Herstellung eines Trennpapiers oder einer Trennfolie, wobei das Verfahren folgende Schritte umfasst:

das Beschichten einer Silikonemulsionszusammensetzung nach einem der Ansprüche 1 bis 11 direkt auf ein Papier- oder Kunststofffoliensubstrat und
das Anwenden von Wärme und UV-Strahlung zum Härten der Beschichtung.

**13.** Verfahren nach Anspruch 12, wobei der Schritt des Anwendens von Wärme und UV-Strahlung die Bestrahlung mit UV-Licht und das anschließende Erhitzen zur Härtung der Beschichtung umfasst.

**14.** Trennpapier oder Trennfolie, das/die eine gehärtete Beschichtung aus einer Silikonemulsionszusammensetzung nach einem der Ansprüche 1 bis 11 umfasst.

**15.** Trennfolie nach Anspruch 14, worin die gehärtete Beschichtung auf einem Kunststofffoliensubstrat aus Polypropylen, Polyethylen, Polyethylenterephthalat oder Polyvinylchlorid vorliegt.

**Revendications**

**1.** Composition en émulsion de silicone durcissant par addition pour papier ou film antiadhésif, comprenant

(A) 100 parties en poids d'un organopolysiloxane contenant au moins deux groupes alcényle par molécule et ayant une viscosité absolue d'au moins 0,04 Pa.s à 25°C,
(B) 0,1 à 10 parties en poids d'un promoteur d'adhérence qui est

(B1) un organopolysiloxane contenant, par molécule, au moins deux groupes substituants contenant un alcényle lié à un silicium, ayant une teneur en alcényle de 0,3 à 2,0 mol/100 g, une viscosité inférieure à 0,04 Pa.s à 25°C, et ayant une structure dans laquelle deux motifs siloxane, dans lesquels un groupe substituant contenant un alcényle est lié à un atome de silicium, sont liés directement, ou sont liés via au plus 3 motifs siloxane intervenants n'ayant pas de groupe substituant contenant un alcényle lié à un atome de silicium, et éventuellement,
(B2) un composé contenant, par molécule, au moins un groupe substituant de 2 à 10 atomes de carbone ayant une liaison insaturée carbone-carbone (double ou triple liaison) à titre de fonctionnalité, et aussi au moins un deuxième groupe substituant ayant un groupe fonctionnel capable de réagir par addition et/ou de réagir par condensation avec le groupe alcényle dans le composant (A) et/ou avec un atome d'hydrogène lié à un silicium dans le composant (C),

(C) 0,1 à 20 parties en poids d'un organohydrogénopolysiloxane contenant, par molécule, au moins trois atomes d'hydrogène liés à un silicium,
(D) une quantité catalytique d'un catalyseur à base d'un élément du groupe du platine,
(E) un tensioactif en une quantité de 0,1 à 20 parties en poids pour 100 parties en poids des composants (A), (B) et (C) combinés, et
(F) 100 à 10 000 parties en poids d'eau,

la composition étant durcissable par une combinaison de chaleur et de rayonnement UV.

**2.** Composition en émulsion de silicone selon la revendication 1, comprenant, en tant que composant (B1), un organopolysiloxane représenté par la formule de composition (1) comprenant une structure de formule générale (2), et ayant un degré moyen de polymérisation de 2 à 50,

$$[M]_{m1}[M^A]_{m2}[D]_{d1}[D^A]_{d2}[T]_{t1}[T^A]_{t2}[Q]_{q1} \qquad (1)$$

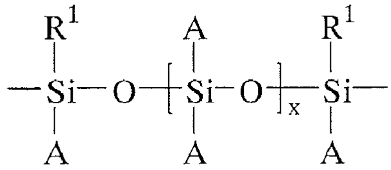

(2)

où $R^1$ est un groupe substituant contenant un alcényle, de 2 à 10 atomes de carbone, A est $R^2$ ou un résidu de siloxane lié via à un atome d'oxygène et choisi de façon à satisfaire à la formule (1), deux groupes A peuvent former une structure cyclique sous la forme $-O\ (SiR^2{}_2O)\ _y-$, $R^2$ est un groupe hydrocarboné monovalent substitué ou non substitué de 1 à 10 atomes de carbone, x est un entier de 0 à 3, y est un entier choisi de façon que l'organopolysiloxane de formule (1) puisse avoir un degré moyen de polymérisation de 2 à 50, M, $M^A$, D, $D^A$, T, $T^A$ et Q sont des motifs siloxane tels que définis ci-dessous, $O_{1/2}$ désignant une liaison à un motif siloxane adjacent via l'atome d'oxygène et $R^1$ et $R^2$ étant tels que définis ci-dessus,

chacun de M et $M^A$ est :

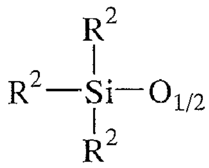

$M^A$ étant un motif dans lequel au moins un $R^2$ est $R^1$, chacun de D et $D^A$ est :

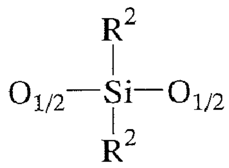

$D^A$ étant un motif dans lequel au moins un $R^2$ est $R^1$, chacun de T et $T^A$ est :

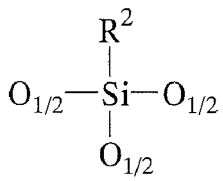

$T^A$ étant un motif dans lequel $R^2$ est $R^1$, Q est :

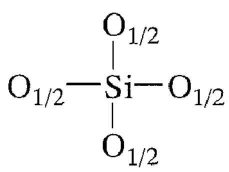

m1, m2, d1, d2, t1, t2 et q1 sont des nombres satisfaisant aux relations suivantes :

$$t1+t2+2xq1 \le m1+m2 \le 2+t1+t2+2xq1$$

$$0 \le d1+d2 \le 48,\ 0 \le t1+t2 \le 30,\ 0 \le q1 \le 20,$$

$$0{,}25 \le (m2+d2+t2)/(m1+m2+d1+d2+t1+t2+q1) \le 1.$$

**3.** Composition en émulsion de silicone selon la revendication 2, dans laquelle x dans la formule (2) vaut 0 ou 1.

**4.** Composition en émulsion de silicone selon la revendication 2 ou 3, dans laquelle le composant (B1) est un composé ayant une structure de siloxane linéaire ou ramifié de formule générale (3) ou (4) :

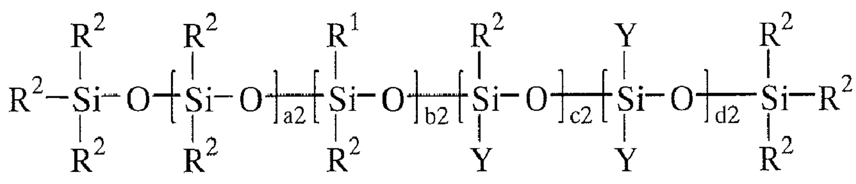

(3)

dans laquelle $R^1$ et $R^2$ sont tels que définis ci-dessus, Y est un groupe de formule (3a) suivante :

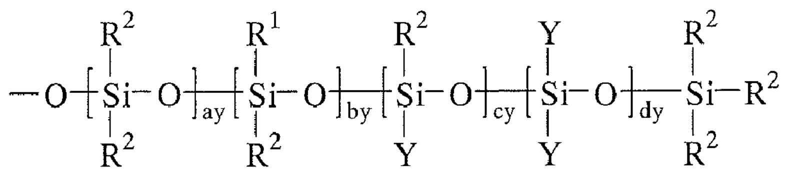

(3a)

dans laquelle $R^1$, $R^2$ et Y sont tels que définis ci-dessus,
chacun de a2, b2, ay et by est un entier de 0 à 48, chacun de c2 et cy est un entier de 0 à 30, et chacun de d2 et dy est un entier de 0 à 20,
chacune des formules (3) et (3a) représente une structure aléatoire et comprend au moins une structure selon laquelle deux motifs siloxane, dans lesquels le groupe substituant contenant un alcényle $R^1$ est lié à un atome de silicium, sont liés directement ou via jusqu'à 3 motifs siloxane intervenants dans lesquels $R^1$ n'est pas lié à un atome de silicium,

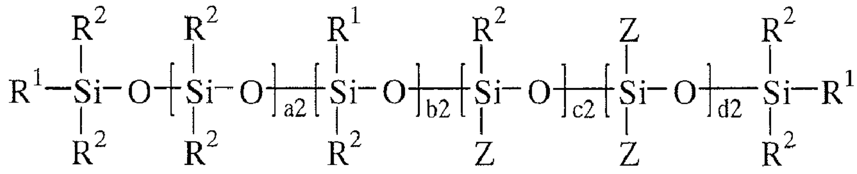

(4)

dans laquelle $R^1$ et $R^2$ sont tels que définis ci-dessus, Z est un groupe de formule (4a) suivante :

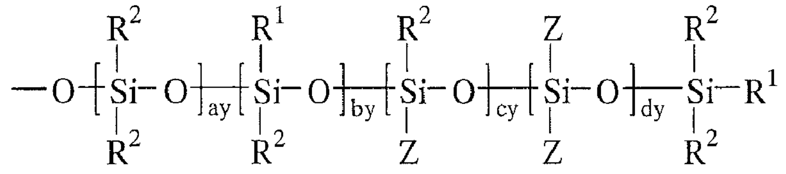

(4a)

dans laquelle $R^1$, $R^2$et Z sont tels que définis ci-dessus,
chacun de a2, b2, ay et by est un entier de 0 à 48, chacun de c2 et cy est un entier de 0 à 30, et chacun de d2 et dy est un entier de 0 à 20,
chacune des formules (4) et (4a) représente une structure aléatoire et comprend au moins une structure selon laquelle deux motifs siloxane, dans lesquels le groupe substituant contenant un alcényle $R^1$ est lié à un atome de silicium, sont liés directement ou via jusqu'à 3 motifs siloxane intervenants dans lesquels $R^1$ n'est pas lié à un atome de silicium.

**5.** Composition en émulsion de silicone selon la revendication 2 ou 3, dans laquelle le composant (B1) est un composé ayant une structure de siloxane cyclique de formule générale (5) :

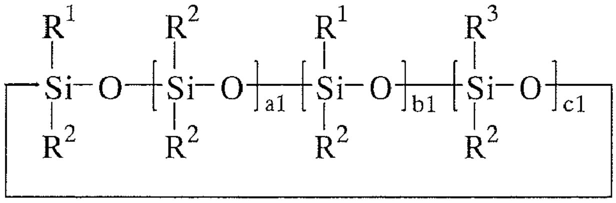

(5)

dans laquelle $R^1$ et $R^2$ sont tels que définis ci-dessus, $R^3$ est un groupe substituant ayant un groupe OH ou SiH à titre de fonctionnalité ou un groupe hydrocarboné monovalent substitué ou non substitué ayant 1 à 10 atomes de carbone sans insaturation aliphatique, a1 vaut 0 ou 1, b1 est un entier de 1 à 6, c1 est un entier de 0 à 5, et a1+b1+c1 est un entier valant au moins 2.

**6.** Composition en émulsion de silicone selon l'une quelconque des revendications 2 à 5, dans laquelle les groupes $R^1$ du composant (B1) sont des groupes alkyle à substitution (méth)acryloyloxy, allyle ou vinyle.

**7.** Composition en émulsion de silicone selon l'une quelconque des revendications précédentes, comprenant un organopolysiloxane (B1) qui contient au moins trois groupes alcényle par molécule.

**8.** Composition en émulsion de silicone selon l'une quelconque des revendications précédentes, comprenant un organopolysiloxane (B1) dans lequel tous les motifs siloxane dans lesquels le groupe substituant contenant un alcényle est lié à un atome de silicium sont lesdits motifs siloxane qui sont liés directement ou liés via au plus 3 motifs siloxane intervenants n'ayant pas de groupe substituant contenant un alcényle lié à un atome de silicium.

**9.** Composition en émulsion de silicone selon la revendication 1, comprenant, en tant que composant (B2), un composé contenant un motif structurel divalent de formule générale (6-1), un composé contenant des motifs structurels divalents de formules générales (6-2) et (6 3), un composé ayant une structure cyclique de formule générale (7-1), ou un composé ayant une structure cyclique de formule générale (7-2)

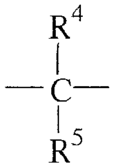

(6-1)

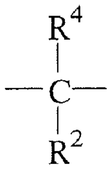

(6-2)

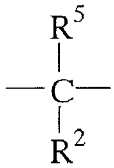

(6-3)

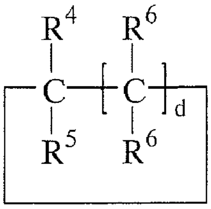

(7-1)

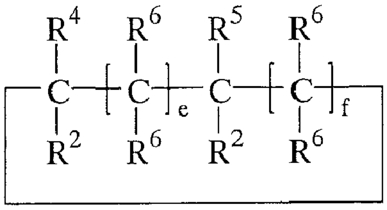

(7-2)

où $R^2$ est un groupe hydrocarboné monovalent substitué ou non substitué de 1 à 10 atomes de carbone, $R^4$ est un groupe substituant de 2 à 10 atomes de carbone contenant un alcynyle, acryloyloxy ou méthacryloyloxy, $R^5$ est un groupe substituant ayant un groupe OH, SiH ou alcényle à titre de fonctionnalité, $R^6$ est l'hydrogène, un groupe hydrocarboné saturé de 1 à 10 atomes de carbone ou un groupe aromatique, le même groupe que $R^4$, ou le même groupe que $R^5$, d vaut de 4 à 10, et e+f vaut de 3 à 9.

10. Composition en émulsion de silicone selon la revendication 9, dans laquelle le composant (B2) est un alcool d'acétylène.

11. Composition en émulsion de silicone selon l'une quelconque des revendications précédentes, dans laquelle le composant (A) est un organopolysiloxane ayant une structure de formule générale (8)

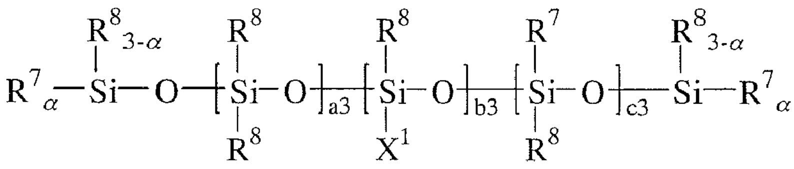

(8)

dans laquelle $R^7$ est un alcényle, $R^8$ est un groupe organique monovalent exempt d'insaturation aliphatique ou un groupe hydroxyle, $X^1$ est un groupe de formule (9)

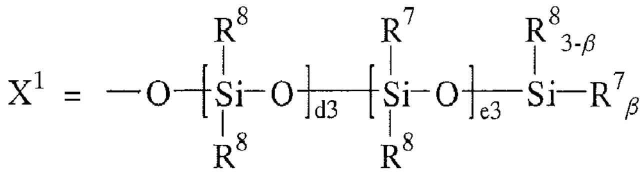

(9)

et dans laquelle chacun de a3, b3, c3, d3 et e3 est un nombre positif tel que l'organopolysiloxane ait une viscosité d'au moins 0,04 Pa.s à 25°C et une viscosité en solution à 30 % dans du toluène allant jusqu'à 70 Pa.s à 25°C, b3, c3, d3 et e3 peuvent valoir 0, et chacun de $\alpha$ et $\beta$ vaut 0 ou est un entier de 1 à 3.

12. Procédé pour préparer un papier ou film antiadhésif, comprenant les étapes de
déposition d'une composition en émulsion de silicone de l'une quelconque des revendications 1 à 11 sous forme de revêtement directement sur un substrat en papier ou en film plastique, et
application de chaleur et de rayonnement UV pour durcir le revêtement.

13. Procédé selon la revendication 12, dans lequel l'étape d'application de chaleur et de rayonnement UV comprend une irradiation UV et ensuite un chauffage pour durcir le revêtement.

14. Papier ou film antiadhésif comprenant un revêtement durci de la composition en émulsion de silicone de l'une quelconque des revendications 1 à 11.

15. Film antiadhésif selon la revendication 14, dans lequel le revêtement durci est sur un substrat de type film plastique en polypropylène, polyéthylène, poly(téréphtalate d'éthylène) ou poly(chlorure de vinyle).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S6286061 A
- JP S63251465 A
- JP H0319267 B
- JP H0978032 A
- JP H11193366 A
- JP 2000169794 A
- JP 2000177058 A
- JP S5753143 B
- JP S5452160 A
- JP S63314275 A
- JP H0657144 A
- JP H11222557 A
- JP 2003192896 A
- EP 13237961 A
- EP 13237961 B1